# EUROPEAN PATENT SPECIFICATION

(11) **EP 3 815 996 B1**
(45) Date of publication and mention of the grant of the patent: **04.09.2024**
(21) Application number: 19824796.7
(22) Date of filing: 24.06.2019
(51) Int. Cl.: B60T 8/34, F16K 15/18, F16K 17/22, F16K 31/365

(54) **VEHICLE BRAKE HYDRAULIC PRESSURE CONTROL DEVICE**
STEUERUNGSVORRICHTUNG FÜR DEN BREMSHYDRAULIKDRUCK EINER FAHRZEUGBREMSE
DISPOSITIF DE RÉGULATION DE PRESSION HYDRAULIQUE DE FREIN DE VÉHICULE

(30) Priority: 28.06.2018 JP 2018123668
(43) Date of publication of application: 05.05.2021
(73) Proprietor: Hitachi Astemo, Ltd., Hitachinaka-shi, Ibaraki (JP)
(72) Inventor: KODAMA, Takuro, Tomi-shi, Nagano 389-0514 (JP); SHIMONO, Takuyo, Tomi-shi, Nagano 389-0514 (JP)
(74) Representative: Dehns
(86) International application number: PCT/JP2019/024922
(87) International publication number: WO 2020/004311

(56) References cited:
- EP-A1- 1 545 951
- EP-A1- 3 815 996
- EP-A1- 3 815 997
- WO-A1-2004/031013
- CN-A- 1 684 863
- JP-A- 2006 500 279
- JP-A- 2006 500 279
- JP-B2- 5 979 752
- JP-B2- 5 979 752
- KR-A- 20050 067 154
- US-A1- 2006 138 860

## Description

### Technical Field

The present invention relates to a vehicle brake hydraulic pressure control device.

### Background Art

A vehicle brake hydraulic pressure control device configured to boost hydraulic pressure in a master cylinder and cause the hydraulic pressure in the master cylinder to act on a wheel brake by an operation of the pump during an increase of the hydraulic pressure is known in vehicles with a bar handle such as motorcycles and three-wheeled vehicles in the related art (see Patent Literatures 1 to 3).

In a vehicle brake hydraulic pressure control device in the Patent Literature 1, interlocking braking between front wheels and rear wheels is enabled.

A vehicle brake hydraulic pressure control device in Patent Literature 2 is characterized in a housing configuration and a structure of arrangement of hydraulic pressure circuit components, and separation of a brake control system of two systems of front wheels and rear wheels is enabled.

A vehicle brake hydraulic pressure control device in Patent Literature 3 includes two pumps.

Patent Literature 4 discloses a compact hydraulic unit for use in an electrohydraulic braking system.

### Citation List

### Patent Literatures

PTL 1: Japanese Patent No.4602428
PTL 2: Japanese patent No. 5979752
PTL 3: Japanese patent No. 6045816
PTL 4: JP 2006 500279 A

### Summary of Invention

### Technical Problem

In the vehicle brake hydraulic pressure control device in Patent Literature 1, since the interlocking braking between the front wheels and the rear wheels is enabled, the number of valves may increase correspondingly, and thus the device is likely to be upsized and to be increased in costs.

In the vehicle brake hydraulic pressure control device in Patent Literature 2, due to the structure having a single pump, there have been requests for improvement of boosting capacity.

In this regards, since the vehicle brake hydraulic pressure control device in Patent Literature 3 is provided with two pumps, discharge capacity can be improved. In Patent Literature 3, one pump is in charge of discharges by brake fluid from a reservoir on a pressure-decreased side and the other pump is in charge of discharges by brake fluid from a master cylinder side. Therefore, Patent Literature 3 has a problem in that the discharge capacity is lowered when the brake fluid in the reservoir is exhausted.

The present invention is directed to solve the above-described problems, and to provide a vehicle brake hydraulic pressure control device capable of reducing manufacture costs while achieving a compact profile, and in addition, improving discharge capacity.

### Solution to Problem

The invention is defined in the appended independent claim 1.

In order to solve the above problem, an aspect of the present invention provides a vehicle brake hydraulic pressure control device equipped with a base body for attaching functional components and being disposed between a master cylinder and a wheel brake, wherein the base body includes an inlet valve made of a normally-opened solenoid valve configured to connect or block between the master cylinder and the wheel brake; an outlet valve made of a normally-closed solenoid valve configured to connect or block between the wheel brake and a reservoir; a pump configured to suck brake fluid on the reservoir side and discharge brake fluid toward the master cylinder and the wheel brake; a regulator connected between the master cylinder and a discharge port of the pump and made of a normally-opened solenoid valve configured to regulate a brake hydraulic pressure on the wheel brake side; a suction valve connected between the master cylinder and an intake port of the pump and configured to be open while increasing the brake hydraulic pressure by the pump, and a hydraulic pressure sensor configured to detect the brake hydraulic pressure of the master cylinder, when one side surface of the base body is divided into two areas by a reference plane, the inlet valve, the outlet valve, and the reservoir are disposed in one area and the regulator, the suction valve, and the hydraulic pressure sensor are disposed in other area, and the inlet valve and the regulator are disposed in symmetry with respect to the reference plane, and the outlet valve and the hydraulic pressure sensor are disposed in symmetry with respect to the reference plane, and the reservoir and the suction valve are disposed in symmetry with respect to the reference plane.

In the present invention, respective components may be disposed efficiently on one surface of the base body, so that the device may be formed to have a compact profile.

The present invention may also be configured by utilizing a base body in a unit of an existing vehicle anti-locking braking control device having two (2-ch) brake systems. The base body of the existing 2-ch device employs a layout in which, when one side surface of the base body is divided into two areas by a reference plane, the inlet valve, the outlet valve, and the reservoir are generally disposed in each area. In the present invention, by utilizing this layout, the inlet valve, the outlet valve, and the reservoir can be disposed in one area, and the regulator, the suction valve, and the hydraulic pressure sensor are disposed in the other area. Accordingly, the vehicle brake hydraulic pressure control device of the present invention may be manufactured by diverting or commonly using manufacturing equipment for the existing vehicle brake hydraulic pressure control device, so that reduction of manufacturing costs is achieved.

For example, the vehicle brake hydraulic pressure control device may be configured to be capable of controlling boosting while having a size substantially equivalent to the base body of the 2-ch vehicle anti-locking braking control device used especially for vehicles with a bar handle. Therefore, miniaturization is achieved while avoiding upsizing of the device, and thus mountability on the vehicles with a bar handle is also improved.

In addition, since the hydraulic pressure sensor is capable of forming into the same size as the outlet valve, relatively cost-effective sensors may be used. This configuration also contributes to miniaturization of the entire device while avoiding provability of interference with other valves.

In this configuration, the base body in the unit of the existing 2-ch vehicle anti-locking braking control device may be desirably utilized. For example, by forming mounting holes for the reservoir and the suction valve in the same shape, the suction valve may be attached by utilizing the existing unit further effectively.

It is also preferable that the suction valve is opened by a pressure difference between a brake hydraulic pressure on the master cylinder side and a brake hydraulic pressure on the intake port side of the pumps, at which a vacuum is created when the pumps are operated.

With the suction valve in this configuration, the suction valve can be designed to be matched with the shape of an existing reservoir mounting hole and attached thereto, which provides superior assembleability.

It is also preferable that the reservoir and the suction valve are disposed in a plane adjacent to the one side surface of the base body.

In this configuration, the reservoir and the suction valve can be disposed without increasing the size of the one side surface of the base body where the inlet valve is disposed more than necessary. Therefore, the entire device can be miniaturized.

Preferably, when the pump includes a pair of pumps disposed in symmetry with respect to the reference plane, the reservoir, the suction valve, and the intake port of each pump are connected by a single pump intake path.

In this configuration, since the boosting is achieved by the pair of pumps based on the brake fluid from the reservoir side and the brake fluid from the suction valve side, enhancement of the boosting capacity is achieved. In addition, the layout with the two pumps provided on the base body in the unit of the existing 2-ch vehicle anti-locking braking control device may be effectively utilized. Therefore, cost reduction is achieved.

Preferably, when the pump intake path includes a first pump intake path for connecting the suction valve and the intake port of one of the pumps and a second pump intake path for connecting the reservoir and the intake port of the other pump, a third pump intake path is provided for connecting the first pump intake path and the second pump intake path.

In this configuration, the first pump intake path on the suction valve side and the second pump intake path on the reservoir side disposed in symmetry with respect to the reference plane may be connected easily with the third pump intake path. Accordingly, the brake fluid on the suction valve side and on the reservoir side can be easily sucked via the third pump intake path, so that enhancement of the boosting capacity is desirably achieved.

Preferably, when a single motor is provided for driving the pair of pumps, the motor is disposed on another side surface of the base body, which is an opposite side of the one side surface, and a bus bar provided on the motor is disposed between the pump intake path and an output shaft of the motor.

In this configuration, the pair of pumps are driven by the single motor and the position of the bus bar is optimized, so that miniaturization of the entire device is achieved. With a configuration in which discharge cycles of the pair of pumps are differentiated by half a cycle, pulsation caused while increasing the brake hydraulic pressure may be reduced.

It is also preferable that a mounting hole for accommodating the suction valve is formed in the other area of the base body, and the suction valve includes a diaphragm operated by a pressure difference between the brake hydraulic pressure on the master cylinder side and the brake hydraulic pressure on the intake port side of the pump, which becomes a vacuum pressure by the operation of the pump. In this case, the diaphragm is preferably disposed in the mounting hole.

In this configuration, the suction valve may be desirably disposed in the other area of the base body by using the mounting hole.

The diaphragm having a large diameter may be disposed by utilizing the reservoir mounting hole of the base body in the unit of the existing vehicle anti-locking braking control device having the two (2-ch) brake systems.

Preferably, when the suction valve includes the normally-closed one-way valve and a plunger configured to contact with and open a valve body of the one-way valve, the diaphragm is configured to push the plunger by a vacuum created on the intake port side of the pump by the operation of the pump and bias the one-way valve to a valve opening direction.

In this configuration, the suction valve operated by the diaphragm is achieved by a relatively simple component configuration. In addition, because of the relatively simple component configuration, reliability of operation is also high.

Preferably, when the one-way valve is accommodated in an accommodating part formed in the mounting hole, an effective diameter of the diaphragm is larger than an inner diameter of the accommodating part.

In this configuration, since the diaphragm having an effective diameter larger than the inner diameter of the accommodating part, enhancement of workability of the diaphragm is enabled even when the brake hydraulic pressure from the master cylinder side is relatively high, so that improvement of openability of the suction valve is achieved. Advantageous Effects of the Invention

In the present invention, the vehicle brake hydraulic pressure control device capable of reducing manufacture costs while achieving miniaturization, and in addition, capable of improving discharge capacity is achieved.

### Brief Description of the Drawings

[Fig. 1] Fig. 1 is a perspective view illustrating a vehicle brake hydraulic pressure control device according to one embodiment of the present invention.
[Fig. 2] Fig. 2 is a hydraulic pressure circuit diagram of the vehicle brake hydraulic pressure control device according to the embodiment of the present invention.
[Fig. 3] Fig. 3 illustrates a base body of the vehicle brake hydraulic pressure control device according to the embodiment of the present invention in which (a) is a top view, (b) is a front view, (c) is a left side view, and (d) is a right side view.
[Fig. 4] Fig. 4 illustrates the base body of the same, in which (a) is a rear view, and (b) is a bottom view.
[Fig. 5] Fig. 5 is a drawing visualizing inner surfaces of respective mounting holes and flow paths formed in a flow path component of the vehicle brake hydraulic pressure control device according to the embodiment of the present invention, in which (a) is a transparent view viewed from the front, and (b) is a transparent view viewed from the right side.
[Fig. 6] Fig. 6 is a drawing visualizing inner surfaces of the respective mounting holes and flow paths formed in the flow path component of the vehicle brake hydraulic pressure control device according to the embodiment of the present invention, in which (a) is a transparent view viewed from the rear, and (b) is a transparent view viewed from the left side.
[Fig. 7] Fig. 7 is a drawing visualizing inner surfaces of the respective mounting holes and flow paths formed in the flow path component of the vehicle brake hydraulic pressure control device according to the embodiment of the present invention, in which (a) is a transparent view viewed from the top, and (b) is a transparent view viewed from the bottom.
[Fig. 8] Fig. 8 is a drawing visualizing inner surfaces of the respective mounting holes and flow paths formed in the flow path component of the vehicle brake hydraulic pressure control device according to the embodiment of the present invention and is a perspective view viewed from the front side.
[Fig. 9] Fig. 9 is a drawing visualizing inner surfaces of the respective mounting holes and flow paths formed in the flow path component of the vehicle brake hydraulic pressure control device according to the embodiment of the present invention and is a perspective view viewed from the rear side.
[Fig. 10A] Fig. 10A is an enlarged cross-sectional view illustrating a suction valve.
[Fig. 10B] Fig. 10B is a cross-sectional view illustrating an effective diameter of a diaphragm of the suction valve.
[Fig. 11A] Fig. 11A is a hydraulic pressure circuit diagram illustrating a flow of a brake fluid during a normal brake operation by operating a pedal.
[Fig. 11B] Fig. 11B is a hydraulic pressure circuit diagram illustrating a flow of the brake fluid when pressurized by pumps with the pedal not operated.
[Fig. 11C] Fig. 11C is a cross-sectional view illustrating a state of operation of the suction valve when pressurized by the pumps with the pedal not operated.
[Fig. 11D] Fig. 11D is a hydraulic pressure circuit diagram illustrating a flow of the brake fluid when pressurized by the pumps with the pedal operated.
[Fig. 11E] Fig. 11E is a cross-sectional view illustrating a state of operation of the suction valve when pressurized by the pumps with the pedal operated.
[Fig. 12] Figs. 12(a) to (c) are explanatory drawings illustrating phases of discharge of the pump.
[Fig. 13A] Fig. 13A is an explanatory drawing illustrating a flow of the brake fluid during the normal brake operation by operating the pedal.
[Fig. 13B] Fig. 13B is a hydraulic pressure circuit diagram illustrating the flow of the brake fluid when pressurized by the pumps with the pedal not operated and with the pedal operated.
[Fig. 14] Fig. 14 illustrates a base body of a brake hydraulic pressure control device provided with two brake systems in which (a) is a top view, (b) is a front view, (c) is a left side view, and (d) is a right side view.
[Fig. 15] Fig. 15 illustrates the base body of the brake hydraulic pressure control device provided with the same two brake systems, in which (a) is a rear view, and (b) is a bottom view.
[Fig. 16] Fig. 16 is a drawing visualizing inner surfaces of respective mounting holes and flow paths formed in a flow path component of the brake hydraulic pressure control device provided with the same two brake systems, in which (a) is a transparent view viewed from the front, and (b) is a transparent view viewed from the right side.
[Fig. 17] Fig. 17 is a drawing visualizing inner surfaces of respective mounting holes and flow paths formed in the flow path component of the brake hydraulic pressure control device provided with the same two brake systems, and is a transparent view viewed from the rear.

### Description of Embodiments

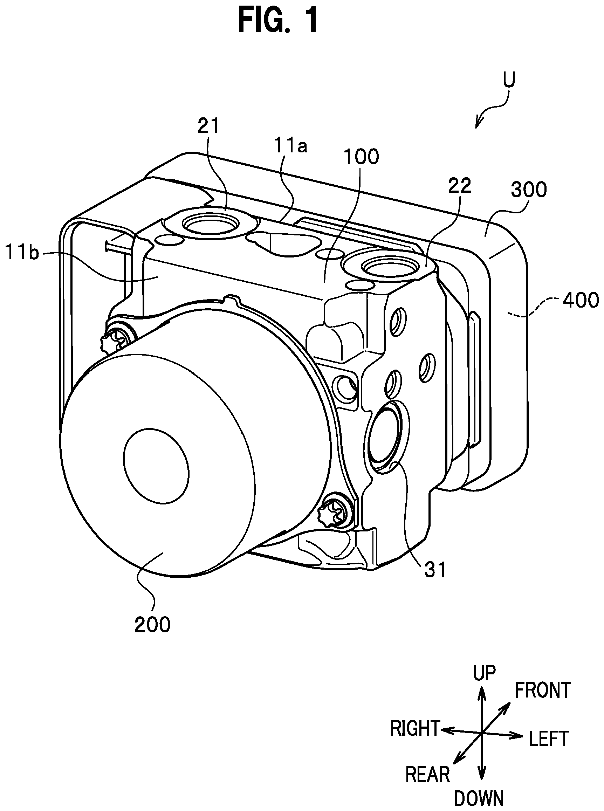

Referring to the drawings as needed, an embodiment of the present invention will be described below in detail. In the following description, when expressing front, rear, up, down, left and right of the vehicle brake hydraulic pressure control device, directions illustrated in Fig. 1 are used as a reference. Note that the directions illustrated in Fig. 1 do not necessarily match the actual state of installation of the device. In the following description, the same components are designated by the same reference signs, and overlapped description will be omitted. Also, in the following, the vehicle brake hydraulic pressure control device of the present embodiment is described as being applied to a vehicle with a bar handle such as motorcycles, three-wheeled vehicles and all terrain vehicles (ATV) for example. However, the description is not intended to limit the vehicles for mounting the device of the present embodiment.

As illustrated in Fig. 1, a vehicle brake hydraulic pressure control device (hereinafter, referred to simply as "brake hydraulic pressure control device") U of the present embodiment is used for vehicles with a bar handle such as motorcycles, three-wheeled vehicles, and all terrain vehicles (ATV). The vehicles for mounting the device has preferably a front wheel brake unit and a rear wheel brake unit separated from each other. In the present embodiment, a brake hydraulic pressure control device configured to control the brake hydraulic pressure acting on a rear wheel brake will be described.

### (Configuration of Brake Hydraulic Pressure Control Device)

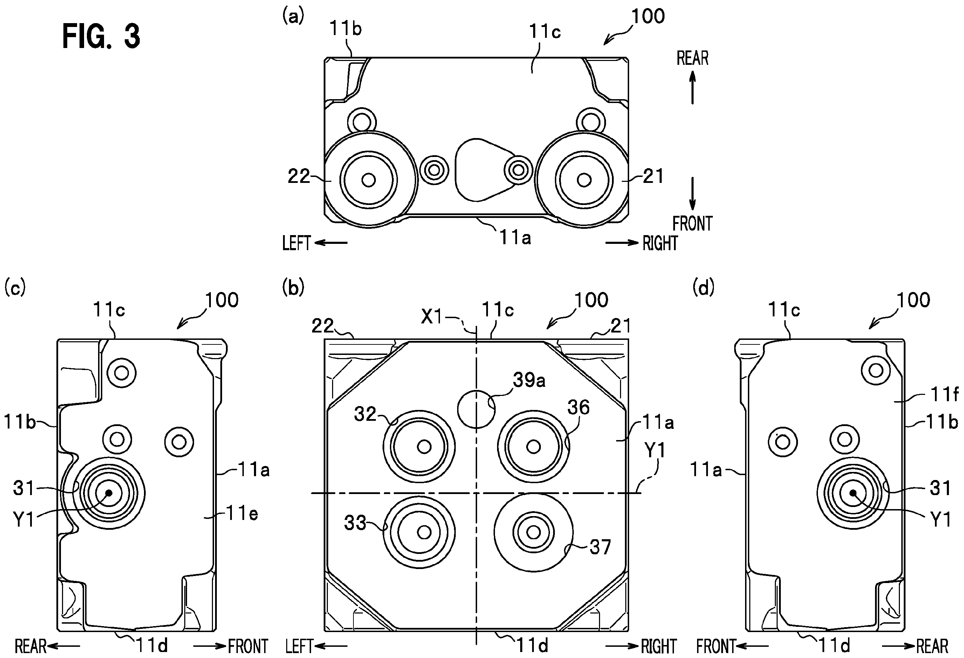

The brake hydraulic pressure control device U includes a base body 100, a motor (electric motor) 200 as a drive source, a control housing 300, and a control device 400 as illustrated in Fig. 1. The motor 200 is attached to a rear surface 11b of the base body 100. The control housing 300 is attached to a front surface 11a of the base body 100 (see Fig. 3(b)). The control device 400 is accommodated in the control housing 300.

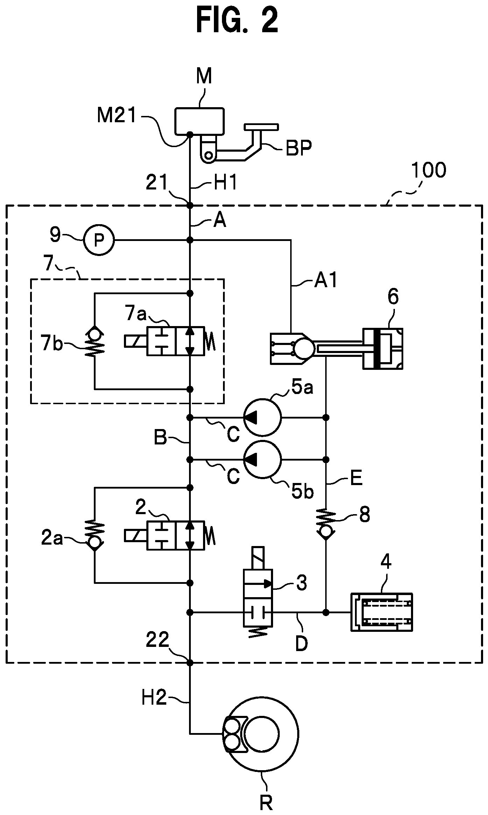

The brake hydraulic pressure control device U is an embodied hydraulic pressure circuit illustrated in Fig. 2. The brake hydraulic pressure control device U can execute anti-locking braking control of a wheel brake R and pressurization control of the wheel brake R.

Note that, in the following, the fluid path extending from the master cylinder M to a regulator 7 is referred to as *"*output hydraulic pressure line A*"*, and a flow path extending from the regulator 7 to an outlet valve 3 and the wheel brake R is referred to as "wheel hydraulic pressure line B". A pair of flow paths extending from pumps 5a, 5b to the wheel hydraulic pressure line B are referred to as "discharge hydraulic pressure lines C, C", and further, a flow path extending from the outlet valve 3 to a reservoir 4 is referred to as "release line D". A flow path extending from the reservoir 4 to the pumps 5a, 5b and a suction valve 6 is referred to as "intake hydraulic pressure passage E". A flow path branched from the output hydraulic pressure line A and reaches to the suction valve 6 is referred to as "branch hydraulic line A1".

In Fig. 2, the brake hydraulic pressure circuit of the brake hydraulic pressure control device U is a circuit extending from an inlet port 21 to an outlet port 22. A pipe H1 connected to an output port M21 of the master cylinder M, which is a hydraulic pressure source, is connected to the inlet port 21. A pipe H2 extending to the wheel brake R is connected to the outlet port 22.

The inlet port 21 is formed on a right area of an upper surface 11c of the base body 100 as illustrated in Fig. 3(a). The outlet port 22 is formed on a left area of the upper surface 11c of the base body 100, which is on an opposite side from the inlet port 21.

Returning back to Fig. 2, a brake pedal BP, which is a brake operation element, is connected to the master cylinder M. The hydraulic pressure circuit mainly includes an inlet valve 2, the outlet valve 3, the reservoir 4, the pumps 5a, 5b, the suction valve 6, and the regulator 7.

The master cylinder M produces a brake hydraulic pressure according to a force applied to the brake pedal BP by a driver. The master cylinder M is connected to the wheel brake R (wheel cylinder) via the pipe H1, the output hydraulic pressure line A, the wheel hydraulic pressure line B, and the pipe H2.

The fluid paths connected to the master cylinder M (output hydraulic pressure line A and wheel hydraulic pressure line B) normally communicate the master cylinder M with the wheel brake R. Accordingly, the brake hydraulic pressure generated by an operation of the brake pedal BP is transmitted to the wheel brake R.

The regulator 7, the inlet valve 2, and the outlet valve 3 are provided on the fluid path connecting the master cylinder M and the wheel brake R.

The regulator 7 has a function of switching a state of conduction of the brake fluid in the output hydraulic pressure line A between an allowing state and a blocked state. The regulator 7 has a function of adjusting the brake hydraulic pressure in the wheel hydraulic pressure line B to a level below a predetermined value when the conduction of the brake fluid in the output hydraulic pressure line A is blocked. The regulator 7 includes a cut valve 7a and a check valve 7b.

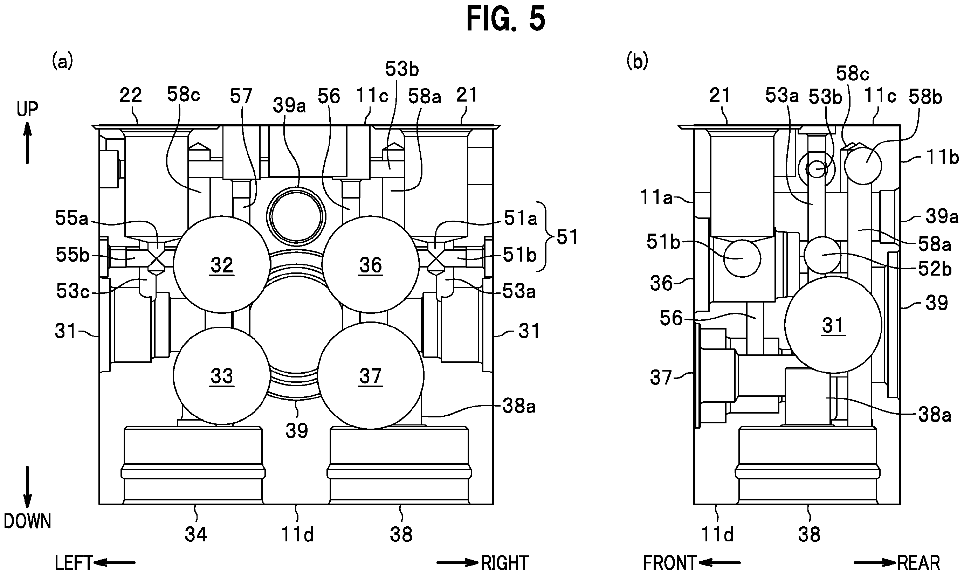

The regulator 7 is mounted in a cut valve mounting hole 36 formed on a right upper portion of the front surface 11a of the base body 100 as illustrated in Fig. 3(b) and Fig. 5(a). The cut valve mounting hole 36 is formed at a position on an upper side with respect to a pump axis Y1 of a right pump mounting hole 31 (see Fig. 5(b)) in a right area of left and right halves delimited by a reference plane X1 orthogonal to the front surface 11a of the base body 100 as illustrated in Fig. 3(b). Note that the pump axis Y1 is a center axial line of the left and right pump mounting holes 31, 31. The reference plane X1 is a plane having the pump axis Y1 as a normal line and is a plane including a motor shaft, not illustrated, of the motor 200.

Returning back to Fig. 2, the cut valve 7a is a normally-opened linear solenoid valve interposed between the output hydraulic pressure line A and the wheel hydraulic pressure line B. The cut valve 7a is configured to switch a state of conduction of the brake fluid from the output hydraulic pressure line A to the wheel hydraulic pressure line B between an allowing state and a blocked state. In other words, the cut valve 7a has a configuration capable of adjusting a valve-opening pressure by controlling energization of the solenoid (a configuration having also a function of a relief valve).

When the cut valve 7a is in a valve-opened state, it is a state allowing the brake fluid discharged from the pumps 5a, 5b to the discharge hydraulic pressure lines C, C and flowed into the wheel hydraulic pressure line B to flow back (to circulate) to the intake hydraulic pressure passage E through the output hydraulic pressure line A, the branch hydraulic line A1, and the suction valve 6.

The cut valve 7a is closed under the control of the control device 400 (see Fig. 1, the same applies to the description below) when performing pressurization control, which will be described later. When the brake hydraulic pressure of the wheel hydraulic pressure line B exceeds the brake hydraulic pressure of the output hydraulic pressure line A, and the difference in pressure between the brake hydraulic pressure of the output hydraulic pressure line A and the brake hydraulic pressure of the wheel hydraulic pressure line B exceeds a force of closing the valve, which is controlled by energization to the solenoid, the cut valve 7a releases the brake hydraulic pressure of the wheel hydraulic pressure line B toward the output hydraulic pressure line A for adjustment.

The check valve 7b is connected in parallel to the cut valve 7a. The check valve 7b is a one-way valve which allows a flow of the brake fluid from the output hydraulic pressure line A to the wheel hydraulic pressure line B. The check valve 7b is integrally provided with a normally-opened solenoid valve which constitutes the regulator 7.

The inlet valve 2 includes the normally-opened solenoid valve provided in the wheel hydraulic pressure line B, and is provided between the regulator 7 and the wheel brake R. The inlet valve 2, when in the valve-opened state, allows transmission of brake hydraulic pressure from the master cylinder M or brake fluid boosted in pressure by the pumps 5a, 5b to the wheel brake R. The inlet valve 2 also blocks the brake hydraulic pressure applied to the wheel brake R by being blocked by the control device 400 when the wheels are about to be locked.

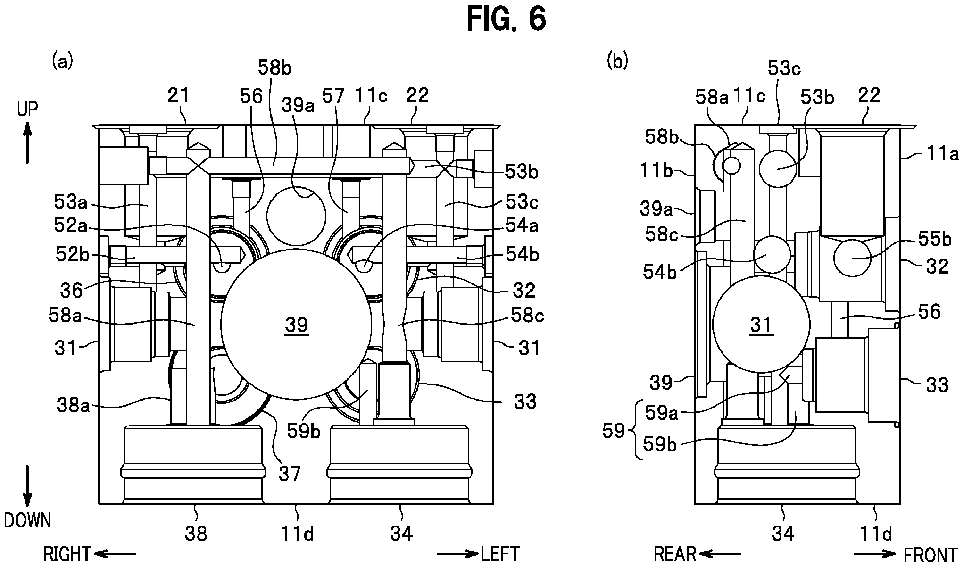

Such an inlet valve 2 is mounted in an inlet valve mounting hole 32 provided on a left upper portion of the front surface 11a of the base body 100 as illustrated in Fig. 3(b) and Fig. 5 (a). The inlet valve mounting hole 32 is formed at positions on an upper side of the pump axis Y1 of the left pump mounting hole 31 (see Fig. 6(b)) in a left area of the two left and right halves divided by the reference plane X1 as illustrated in Fig. 3(b). The inlet valve mounting hole 32 is formed on the same side as the outlet port 22 of the upper surface 11c of the base body 100.

Returning back to Fig. 2, the check valve 2a is connected to the inlet valve 2 in parallel. The check valve 2a is a valve configured to allow only a flow of the brake fluid from the wheel brake R toward the master cylinder M. The check valve 2a allows the inflow of the brake fluid from the wheel brake R side toward the master cylinder M even when the inlet valve 2 is closed in a case where an input of the brake pedal BP is released. The check valve 2a is integrally provided with the normally-opened solenoid valve which constitutes the inlet valve 2.

The outlet valve 3 is made of the normally-closed solenoid valve. The outlet valve 3 is provided between the wheel brake R and the reservoir 4 (between the wheel hydraulic pressure line B and the release line D). The outlet valve 3 is normally closed but releases the brake hydraulic pressure applied to the wheel brake R to the reservoir 4 by being opened by the control device 400 when a rear wheel is about to be locked.

Such an outlet valve 3 is mounted in an outlet valve mounting hole 33 provided on a left lower portion of the front surface 11a of the base body 100 as illustrated in Fig. 3(b) and Fig. 5(a). The outlet valve mounting hole 33 is formed at positions on a lower side of the pump axis Y1 of the left pump mounting hole 31 (see Fig. 6(b)) in a left area of the two left and right halves divided by the reference plane X1 as illustrated in Fig. 3(b). The outlet valve mounting hole 33 is provided on the same side as the inlet valve mounting hole 32 in the vertical direction of the base body 100.

Returning back to Fig. 2, the reservoir 4 has a function of temporarily storing the brake fluid released by opening the outlet valve 3.

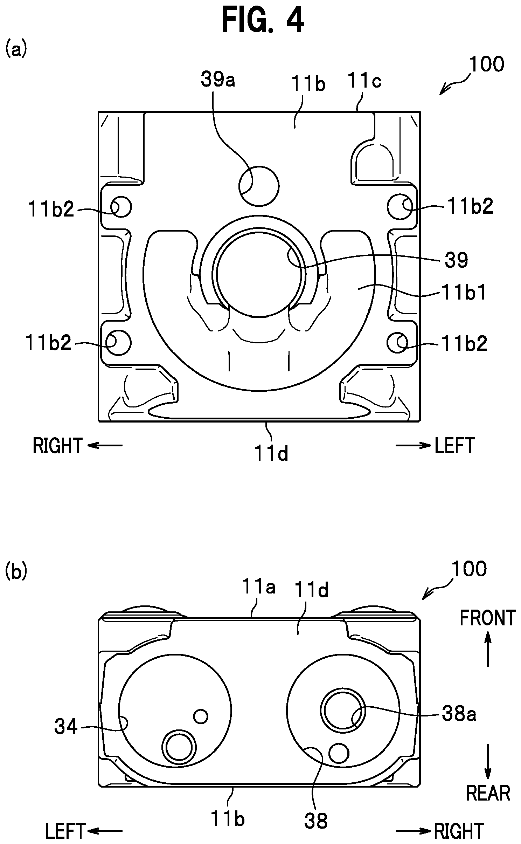

The reservoir 4 is mounted in a reservoir mounting hole 34 illustrated in Fig. 4(b) . The reservoir mounting hole 34 is opening on the left area of a lower surface 11d of the base body 100. In other words, the reservoir 4 is provided in the left lower portion of the base body 100.

The pumps 5a, 5b are arranged in lateral symmetry with respect to the reference plane X1 (see Fig. 3(b)). The pumps 5a, 5b are plunger pumps driven by the electric motor 200. The pumps 5a, 5b are each provided with a plunger, not illustrated, and an intake valve and a discharge valve, not illustrated. One pump 5a is interposed between the intake hydraulic pressure passage E and one discharge hydraulic pressure line C, and the other pump 5b is interposed between the intake hydraulic pressure passage E and the other discharge hydraulic pressure line C. The pumps 5a, 5b are driven by a rotational force of the motor 200.

The pumps 5a, 5b are differentiated in discharge cycle of the brake fluid by half a cycle. In other words, the pumps 5a, 5b are shifted in discharge cycle from each other by half a cycle and are configured to discharge the brake fluid twice to the wheel hydraulic pressure line B while an output shaft of the motor 200 makes one turn.

The pumps 5a, 5b suck the brake fluid stored temporarily in the reservoir 4 and discharge the same to the discharge hydraulic pressure lines C, C. The pumps 5a, 5b also suck the brake fluid stored in the master cylinder M, the branch hydraulic line A1, the intake hydraulic pressure passage E, and the reservoir 4 and discharge the same to the discharge hydraulic pressure lines C, C when the cut valve 7a is in the valve-closed state and the suction valve 6 is in the valve-opened state. Accordingly, the brake hydraulic pressure generated by an operation of the brake pedal BP may be increased. Furthermore, even in the state in which the brake pedal BP is not operated, the brake hydraulic pressure may be made act on the wheel brake R (pressurization control) .

Such pumps 5a, 5b are mounted in the pump mounting holes 31, 31 drilled from a left side surface 11e and a right side surface 11f of the base body 100 as illustrated in Figs. 3(c) (d) and so forth.

### (Configuration of Suction Valve)

The suction valve 6 is a suction valve of a mechanical type and is configured to switch a state of connection between the branch hydraulic line A1 and the intake hydraulic pressure passage E from an opened state to a blocked state and vice versa. The suction valve 6 is configured to open by a pressure difference between the brake hydraulic pressure on the master cylinder M side (the branched hydraulic pressure line side) and the brake hydraulic pressure on the intake port side (the intake hydraulic pressure passage E side) of the pumps 5a, 5b, at which a vacuum is created by the operation of the pumps 5a, 5b.

The suction valve 6 is mounted in a suction valve mounting hole 38 illustrated in Fig. 4(b), Fig. 5(a) and so forth. The suction valve mounting hole 38 is opened on the right area of the lower surface 11d of the base body 100. In other words, the suction valve 6 is provided in the right lower portion of the base body 100.

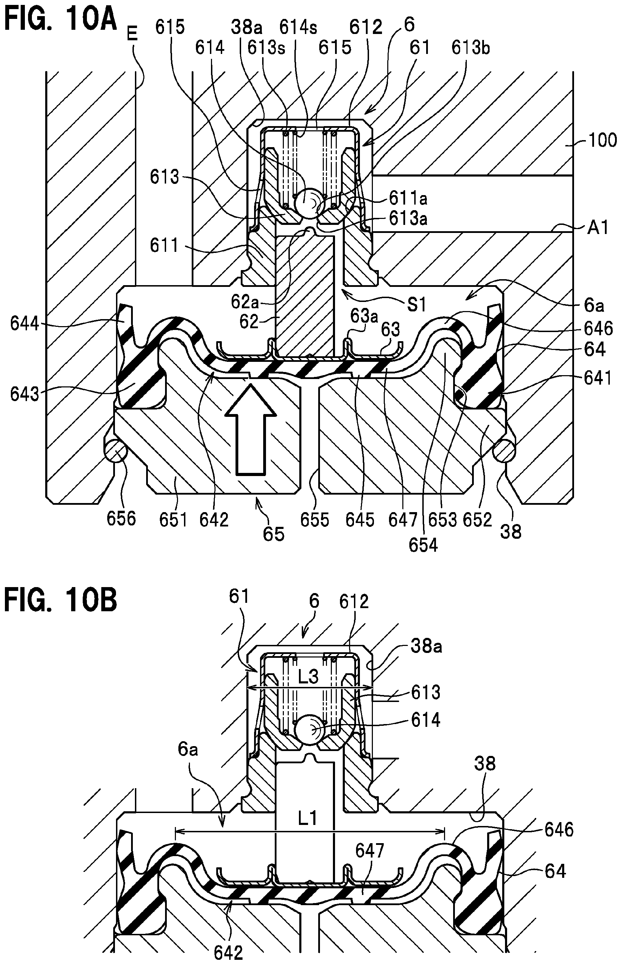

The suction valve 6 includes a normally-closed one-way valve 61, a plunger 62, a plunger plate 63, a diaphragm 64, and a lid member 65 as a plug for fixing the diaphragm 64 as illustrated in Fig. 10A. The one-way valve 61 is a valve to be mounted in a one-way valve mounting hole 38a as an accommodating part formed on a bottom portion of the suction valve mounting hole 38 of the base body 100. The one-way valve mounting hole 38a is smaller than the suction valve mounting hole 38 in diameter. The branch hydraulic line A1 communicates with the one-way valve mounting hole 38a.

The one-way valve 61 includes an annular fixed portion 611, a retainer 612 to be fixed to an upper end portion of the fixed portion 611, a large diameter valve 613 disposed in the retainer 612, and a spherical small diameter valve 614 disposed inside the large diameter valve 613. The fixed portion 611 is fixed to an inner wall of an opening of the one-way valve mounting hole 38a by swaging. An annular valve seat 611a on which the large diameter valve 613 is seated is formed on the upper end portion of the fixed portion 611. The valve seat 611a is formed into a tapered shape in cross section.

The retainer 612 has a substantially hat shape in cross section. The large diameter valve 613 and the small diameter valve 614 are accommodated in an interior of the retainer 612. A lower end portion of the retainer 612 is fitted at an upper end on an outer peripheral wall of the fixed portion 611. The retainer 612 includes an insertion hole 615 to allow conduction of the brake fluid on a peripheral wall and a bottom portion thereof.

The large diameter valve 613 has a recessed shape in cross-section. The small diameter valve 614 is accommodated inside the large diameter valve 613. An outer peripheral surface of a bottom portion of the large diameter valve 613 is formed into a tapered shape or an arcuate shape in cross section corresponding to the valve seat 611a of the fixed portion 611. The large diameter valve 613 is biased in a seating direction by a coil-shaped valve spring 613s provided in a compressed state between the large diameter valve 613 and the bottom portion of the retainer 612 and is seated on the valve seat 611a. An insertion hole 613a is formed in the bottom portion of the large diameter valve 613. The insertion hole 613a is formed into a size which allows insertion of a protrusion 62a of the plunger 62.

An annular valve seat 613b is formed at an opening edge portion on an upper side of the insertion hole 613a. The valve seat 613b is formed into a tapered shape in cross section and allows the small diameter valve 614 to be seated.

The small diameter valve 614 is biased in the seating direction by a coil-shaped valve spring 614s provided in a compressed state between the small diameter valve 614 and the bottom portion of the retainer 612 and is seated on the valve seat 613b. The valve spring 614s is smaller than the valve spring 613s in diameter.

The plunger 62 is a column shaped member. An upper portion of the plunger 62 is inserted inside the fixed portion 611 of the one-way valve 61. The plunger 62 has a substantially triangular shape in cross section in a direction orthogonal to an axial direction. Accordingly, a space S1 is formed between an outer surface of the plunger 62 and an inner surface of the fixed portion 611 of the one-way valve 61. The space S1 serves as a conduction flow path for the brake fluid.

The protrusion 62a protruding upward is formed on an upper end surface of the plunger 62. The protrusion 62a is formed at a position corresponding to the insertion hole 613a of the bottom portion of the large diameter valve 613. The protrusion 62a is inserted into the insertion hole 613a when the plunger 62 described later moves upward and presses the small diameter valve 614 seated on the valve seat 613b upward. Accordingly, the small diameter valve 614 moves away from the valve seat 613b.

An upper surface of the plunger 62 is formed into a flat shape other than the protrusion 62a and thus can come into contact with the lower surface of the bottom portion of the large diameter valve 613. The upper surface of the plunger 62 comes into contact with the lower surface of the bottom portion of the large diameter valve 613 and presses the large diameter valve 613 upward when the plunger 62 described later moves upward. The large diameter valve 613 moves away from the valve seat 611a by being pushed in this manner. Note that a groove or a recess which allows smooth conduction of the brake fluid may be formed on the upper surface of the plunger 62 or the lower end surface of the large diameter valve 613.

The plunger 62 is fixed in a state of being erected on an upper surface of the plunger plate 63.

The plunger plate 63 has a disk shape. The plunger plate 63 is placed at a center portion of the upper surface of the diaphragm 64. An annular rib 63a in which the lower portion of the plunger 62 is fitted and held is formed on the upper surface of the plunger plate 63. An outer peripheral edge portion of the plunger plate 63 rises upward in an arcuate shape in cross section.

The diaphragm 64 includes an annular seal portion 641 in tight contact with an inner peripheral surface of the suction valve mounting hole 38, and a thin film drive unit 642 continuing radially inward of the seal portion 641 and pushes the plunger 62.

The seal portion 641 includes a first seal portion 643, and an annular cup seal portion 644 continuing from the first seal portion 643 and extending upward so as to be opposite side from an opening of the suction valve mounting hole 38.

The first seal portion 643 includes a thickness in the radial direction and formed into an annular shape and is tightly fitted to an inner peripheral surface of the suction valve mounting hole 38 on the opening side to seal to avoid suction of air from outside due to a vacuum created when the pump is operated. The cup seal portion 644 has a substantially cup shape in cross section and is tightly adhered to the inner peripheral surface of the suction valve mounting hole 38 on the opposite side from the opening to seal. The cup seal portion 644 is configured to prevent the brake fluid from leaking out when receiving the brake fluid on the master cylinder M side, for example, in a case where the suction valve 6 is immobilized in the opened state.

The thin film drive unit 642 includes a rising portion 646 formed to be thinner than the seal portion 641 and extending in an arcuate shape radially inward from the seal portion 641, and a flat portion 647 continuing radially inward of the rising portion 646. When a vacuum is created in a vacuum chamber 6a partitioned by the diaphragm 64, the rising portion 646 is subject to elastic deformation and moved so that the flat portion 647 rises toward the one-way valve 61. An annular rib 645 is formed on a lower surface of the flat portion 647 for preventing tight contact of the flat portion 647 to an upper surface of the lid member 65.

An effective diameter L1 of the diaphragm 64 is set to be larger than an inner diameter L3 of the one-way valve mounting hole 38a as illustrated in Fig. 10B. In other words, the effective diameter L1 is always larger than the outer diameter of the large diameter valve 613 disposed in the one-way valve mounting hole 38a, whereby a pressure-receiving surface area of the effective diameter L1 portion of the diaphragm 64 is set to be larger than the pressure-receiving surface area of the large diameter valve 613 as a matter of necessity. With such dimensions, even when the brake hydraulic pressure on the master cylinder M side is high when pressurized by the pumps with the brake pedal BP operated, opening of the suction valve 6 is ensured.

The lid member 65 is a member to be inserted inside the opening of the suction valve mounting hole 38 to fix the diaphragm 64 in the suction valve mounting hole 38 (in the base body 100). The lid member 65 is provided with a base portion 651, a fitting portion 652, a retaining portion 653, a lip portion 654, and an atmosphere communicating hole 655.

The fitting portion 652 has a flange shape extending radially outward and is fitted into the inner peripheral surface of the suction valve mounting hole 38. An engagement ring 656 for retention is engaged with the fitting portion 652 from axially outside. The retaining portion 653 is formed by using an upper surface of the fitting portion 652. The first seal portion 643 of the diaphragm 64 is fitted on the retaining portion 653. The lip portion 654 continues to the retaining portion 653 and protrudes upward from the retaining portion 653. An upper end portion of the lip portion 654 has an arcuate shape. The lip portion 654 is positioned downward of the rising portion 646 of the diaphragm 64. The lip portion 654 is positioned downward of the rising portion 646 to prevent deformation of the diaphragm 64 more than necessary when the brake hydraulic pressure from the master cylinder M side acts on the vacuum chamber 6a, for example, in a case where the suction valve 6 is immobilized in an opened state.

Returning back to Fig. 2, a check valve 8 is provided in the intake hydraulic pressure passage E. The check valve 8 is a one-way valve configured to allow a flow of the brake fluid from the reservoir 4 side toward the pumps 5a, 5b.

A hydraulic pressure sensor 9 is disposed in the output hydraulic pressure line A. The hydraulic pressure sensor 9 is configured to measure a magnitude of the brake hydraulic pressure of the output hydraulic pressure line A, that is, the brake fluid pressure in the master cylinder M.

A value of the brake hydraulic pressure measured by the hydraulic pressure sensor 9 is retrieved as needed by the control device 400 to determine whether or not the brake fluid pressure is output from the master cylinder M by the control device 400, that is, whether or not the brake pedal BP is pressed. Further, the pressurization control or the like is performed based on the magnitude of the brake hydraulic pressure measured by the hydraulic pressure sensor 9.

The motor 200 is a common power source of the two pumps 5a, 5b, and is operated based on a command from the control device 400. The motor 200 is attached by inserting a motor shaft, not illustrated, into a motor shaft insertion hole 39 having a circular recessed shape of the rear surface (the other surface) 11b of the base body 100 as illustrated in Fig. 4(a).

The control device 400 (see Fig. 1) controls opening and closing of the cut valve 7a of the regulator 7, the inlet valve 2 and the outlet valve 3 as well as the operation of the motor 200 based on output from the hydraulic pressure sensor 9, a wheel speed sensor, not illustrated, an acceleration sensor or yaw rate sensor for measuring the movement of a vehicle body, and external sensors such as a radar camera.

Next, referring to the hydraulic pressure circuit illustrated in Fig. 2, normal braking, anti-locking braking control, and the pressurization control realized by the control device 400 will be described.

### (Normal Braking)

During normal braking in which the respective wheels have no probability of being locked, a plurality of electromagnetic coils for driving the above-described plurality of solenoid valves are demagnetized by the control device 400. In other words, in the normal braking, the cut valve 7a and the inlet valve 2 are in the valve-opened state, and the outlet valve 3 is in the valve-closed state. The one-way valve 61 of the suction valve 6 is in the valve-closed state.

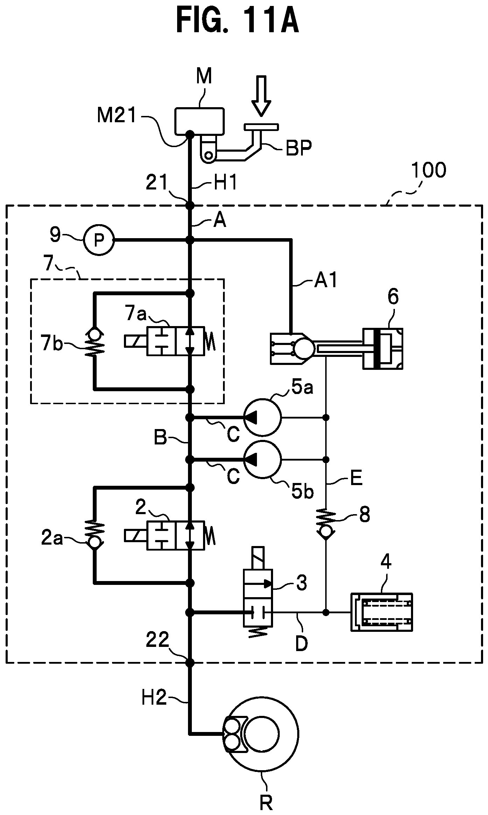

When the driver presses the brake pedal BP in such a state, the brake hydraulic pressure caused by the pressing force is transmitted as-is to the wheel brake R, so that a brake is applied to the wheel as illustrated in Fig. 11A.

In this case, the brake hydraulic pressure from the master cylinder M acts on the suction valve 6 via the branch hydraulic line A1. Accordingly, the large diameter valve 613 and the small diameter valve 614 of the one-way valve 61 (see Fig. 10A, the same applies hereinafter) receive the brake hydraulic pressure and are seated respectively, so that the valve-closed state is maintained. In other words, the brake hydraulic pressure from the master cylinder M does not act on the intake hydraulic pressure passage E side.

### (Anti-Locking Braking Control)

The anti-locking braking control is executed when the wheel is about to be brought into a locked state, and is achieved by selecting one of pressure-decreasing, pressure-increasing or maintaining constant the brake hydraulic pressure acting on the wheel brake R as needed. Note that which one of pressure-decreasing, pressure-increasing or maintaining is to be selected is determined by the control device 400 based on the wheel speed obtained from a wheel speed sensor, not illustrated.

If the wheel is about to be brought into the locked state while pressing the brake pedal BP, the anti-locking braking control is started by the control device 400.

In the pressure-decreasing control, the inlet valve 2 is brought into the valve-closed state by the control device 400, and the outlet valve 3 is brought into the valve-opened state. In this configuration, the brake fluid of the wheel hydraulic pressure line B communicating with the wheel brake R flows into the reservoir 4 through the release line D. Consequently, the brake hydraulic pressure acting on the wheel brake R is decreased.

Note that when the anti-locking braking control is executed, the motor 200 is driven by the control device 400 to actuate the pumps 5a, 5b, and the brake fluid stored in the reservoir 4 is flowed back toward the wheel hydraulic pressure line B via the discharge hydraulic pressure line C.

In the control of maintaining constant, the inlet valve 2 and the outlet valve 3 are brought into the valve-closed state by the control device 400. In this configuration, the brake fluid is enclosed in the flow path closed by the inlet valve 2 and the outlet valve 3. Consequently, the brake hydraulic pressure acting on the wheel brake R is maintained constant.

In the pressure-increasing control, the inlet valve 2 is brought into the valve-opened state and the outlet valve 3 is brought into the valve-closed state by the control device 400. In this configuration, the brake hydraulic pressure caused by pressing the brake pedal BP acts directly on the wheel brake R. Consequently, the brake hydraulic pressure acting on the wheel brake R is increased.

### (Pressurization Control)

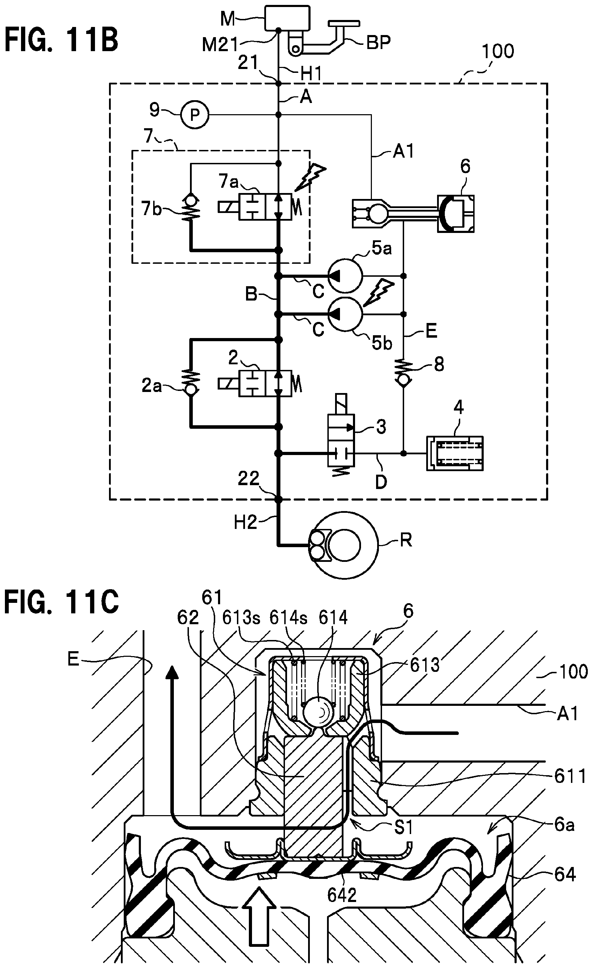

When applying a brake to the wheel by the control device 400 is determined to be necessary in a non-operation state in which the brake pedal BP is not operated, the control device 400 energizes the cut valve 7a to bring the same to the valve-closed state, and drives the pumps 5a, 5b as illustrated in Fig. 11B.

When the pumps 5a, 5b are driven, the brake fluid in the intake hydraulic pressure passage E is sucked by the pumps 5a, 5b, and a vacuum is created in the intake hydraulic pressure passage E. Accordingly, a vacuum is created in the vacuum chamber 6a (see Fig. 10A) of the suction valve 6 that communicates with the intake hydraulic pressure passage E, and the vacuum causes elastic deformation of the thin film drive unit 642 of the diaphragm 64 toward the one-way valve 61. The elastic deformation makes the upper surface of the plunger 62 come into contact with the lower surface of the large diameter valve 613 and pushes the large diameter valve 613 upward.

Accordingly, as illustrated in Fig. 11C, the large diameter valve 613 moves away from the annular valve seat 611a, and the branch hydraulic line A1 communicates with the vacuum chamber 6a through the space S1 of the plunger 62. This communication causes the brake fluid on the master cylinder M side to flow into the vacuum chamber 6a from the branch hydraulic line A1 through the one-way valve 61, and further, flows from the vacuum chamber 6a into the intake hydraulic pressure passage E and is sucked by the pumps 5a, 5b.

The brake fluid pressurized by the pumps 5a, 5b is discharged from the pumps 5a, 5b to the wheel hydraulic pressure line B as illustrated in Fig. 11B and acts on the wheel brake R. Accordingly, a brake is applied to the wheel.

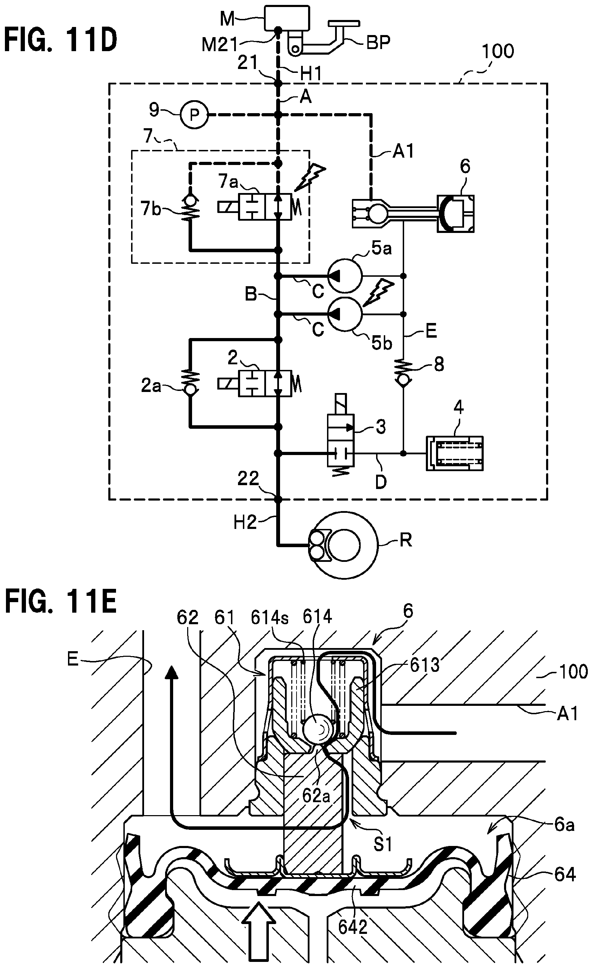

Next, an operation when application of brake to the wheel by the control device 400 is determined to be necessary when in the operating state in which the brake pedal BP is operated will be described. In this case as well, as illustrated in Fig. 11D, the control device 400 energizes the cut valve 7a and brings the same into the valve-closed state and drives the pumps 5a, 5b.

When the pumps 5a, 5b are driven, the brake fluid in the intake hydraulic pressure passage E is sucked by the pumps 5a, 5b, and a vacuum is created in the intake hydraulic pressure passage E in the same manner as described above. Accordingly, a vacuum is created in the vacuum chamber 6a of the suction valve 6 that communicates with the intake hydraulic pressure passage E, and the vacuum causes elastic deformation of the thin film drive unit 642 of the diaphragm 64 toward the one-way valve 61, and the protrusion 62a on the upper surface of the plunger 62 comes into contact with the small diameter valve 614. In this case, a pressing force of the brake hydraulic pressure on the master cylinder M side caused by a pressing force of the driver and a biasing force of the valve spring 614s act on the small diameter valve 614. Therefore, when a force of the plunger 62 pushing the small diameter valve 614 upward exceeds a resultant force of the pressing force and the biasing force acting on the small diameter valve 614, the small diameter valve 614 moves away from the valve seat 613b. In other words, the small diameter valve 614 is opened by a difference force between the push-up force and the resultant force.

When the small diameter valve 614 moves away from the seat, the branch hydraulic line A1 communicates with the vacuum chamber 6a through the space formed by separation and the space S1 of the plunger 62 as illustrated in Fig. 11E. This communication causes the brake fluid on the master cylinder M side to flow into the vacuum chamber 6a from the branch hydraulic line A1 through the one-way valve 61, and further, flows from the vacuum chamber 6a into the intake hydraulic pressure passage E and is sucked by the pumps 5a, 5b.

At this time, when the brake fluid on the master cylinder M side flows into the vacuum chamber 6a, the brake hydraulic pressure on the master cylinder M side acts on the diaphragm 64, and the thin film drive unit 642 moves back toward the lid member 65. Accordingly, a force of the plunger 62 pushing the small diameter valve 614 upward disappears and thus the small diameter valve 614 is seated on the valve seat 613b.

During the operation of the pumps 5a, 5b, the actions described above are repeatedly performed. In other words, opening and closing of the small diameter valve 614 are repeatedly performed and the brake fluid pressurized by the pumps 5a, 5b acts on the wheel brake R. Accordingly, a brake is applied to the wheel.

When the pressurization control and the like as described above is performed, pulsation of the brake fluid discharged from the pumps 5a, 5b is desirably damped by the cooperation of the two pumps 5a, 5b.

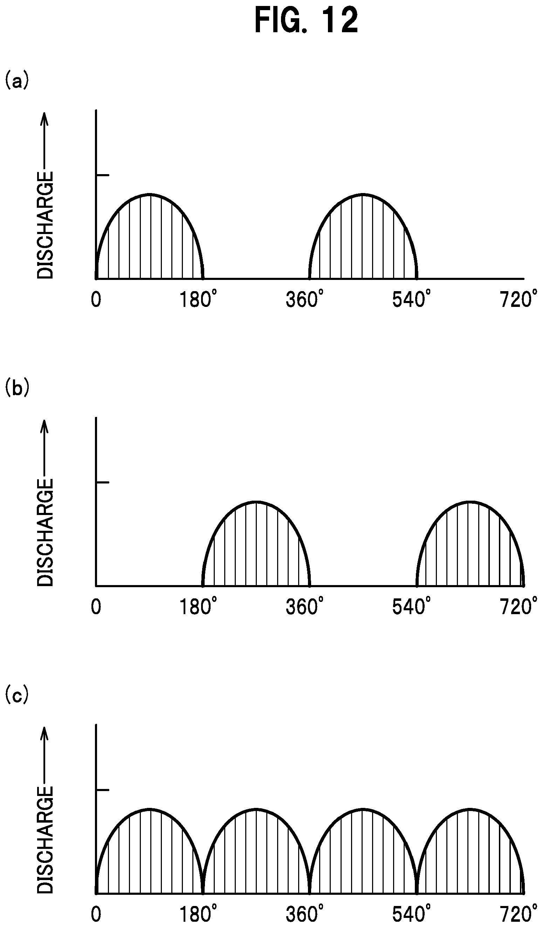

Specifically, discharge of the pump 5a alone may be expressed by non-continuous two mountain curves as illustrated in Fig. 12(a). In contrast, discharge of the pump 5b alone is performed at a phase of 180 degrees shifted from the discharge of the pump 5a by half a cycle and may be expressed by non-continuous two mountain curves as illustrated in Fig. 12(b). Therefore, combined discharge from the two pumps 5a, 5b is expressed by four continuous mountain curves as illustrated in Fig. 12(c).

Accordingly, in the present embodiment, an effect of alleviation of discharge pulsation is achieved compared with the case where discharge is performed by the single pump 5a, for example.

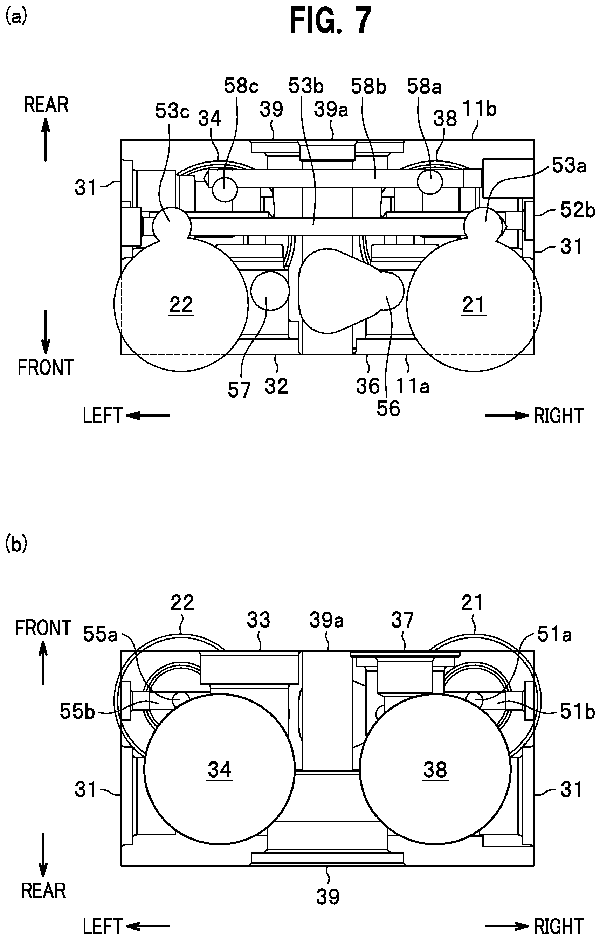

Referring now to Fig. 1 and Fig. 3 to Fig. 9, specific structure of the brake hydraulic pressure control device U will be described in detail.

The brake hydraulic pressure control device U includes the base body 100, the electric motor 200, the control housing 300, and the control device 400 (see Fig. 1) as described above.

The base body 100 is made of an extruded material or a cast product of aluminum alloy having a substantially cubic shape. The front surface 11a of the base body 100 is formed into a substantially flat plane without any depressions and projections. The base body 100 is provided with a flow path component which constitutes one brake output system (see Fig. 2) .

Referring to Figs. 3(a) to (d), Figs. 4(a), (b) as needed for description, a flow path component includes a plurality of mounting holes opening on the front surface 11a, and the motor shaft insertion hole 39 opening on the rear surface 11b. The flow path component further includes the inlet port 21 and the outlet port 22 opening on the upper surface 11c as well as the pump mounting holes 31, 31, opening on the left side surface 11e and the right side surface 11f.

The inlet valve mounting hole 32, the outlet valve mounting hole 33, the cut valve mounting hole 36, and a sensor mounting hole 37 are formed as mounting holes in the front surface 11a of the base body 100. The inlet valve mounting hole 32 is provided in the left area of the reference plane X1 on an upper side of the base body 100 with respect to the pump axis Y1 of the pump mounting holes 31. The outlet valve mounting hole 33 is provided in the left area of the reference plane X1 on a lower side of the base body 100 with respect to the pump axis Y1 of the pump mounting holes 31.

The cut valve mounting hole 36 is provided in the right area of the reference plane X1 on an upper side of the base body 100 with respect to the pump axis Y1 of the pump mounting holes 31. The inlet valve mounting hole 32 and the cut valve mounting hole 36 are provided at positions symmetry with respect to the reference plane X1.

Note that the inlet valve mounting hole 32, the outlet valve mounting hole 33, and the cut valve mounting hole 36 all have the same diameter.

The inlet valve 2 is mounted in the inlet valve mounting hole 32, and the outlet valve 3 is mounted in the outlet valve mounting hole 33. The cut valve 7a is mounted in the cut valve mounting hole 36.

The sensor mounting hole 37 is provided in the right area of the reference plane X1 on the lower side of the base body 100 in a state of partly overlapping with the pump axis Y1 of the pump mounting holes 31. Note that the center position of the sensor mounting hole 37 and the center position of the outlet valve mounting hole 33 are positioned in symmetry with respect to the reference plane X1.

The motor shaft insertion hole 39 is formed at a center portion of the rear surface 11b of the base body 100. Further, around the motor shaft insertion hole 39, a recess 11b1 formed to be deeper than the rear surface 11b and having a U-shape in rear view is formed. A front cover of the housing of the electric motor 200 (see Fig. 1, the same applies hereinafter) is mounted in the recess 11b1. The electric motor 200 is attached to a mounting hole 11b2 (see Fig. 4(a)) provided in the rear surface 11b with a mounting screw (not illustrated). A seal member is interposed between the electric motor 200 and the rear surface 11b.

The rear surface 11b is provided with a hole portion 39a opening for inserting a bus bar (not illustrated) of the electric motor 200 at a position upward of the motor shaft insertion hole 39. The hole portion 39a penetrates in the fore-and-aft direction through the base body 100 and opening on the front surface 11a so as to intersect the reference plane X1.

The inlet port 21 and the outlet port 22 are formed so as to depress in the upper surface 11c of the base body 100. The inlet port 21 is provided at a positional relationship corresponding to the cut valve mounting hole 36 as illustrated in Figs. 3(a) (b). The outlet port 22 is provided at a positional relationship corresponding to the inlet valve mounting hole 32. The pipe H1 (see Fig. 2) from the master cylinder M is connected to the inlet port 21. The pipe H2 (see Fig. 2) extending to the wheel brake R is connected to the outlet port 22.

A blank space in which the inlet port 21 or the like is not formed is formed in left and right areas of the upper surface 11c of the base body 100 on the rear side as illustrated in Fig. 3(a). In other words, the upper surface 11c of the base body 100 includes a blank space where the inlet port 21 or the like can be formed.

The reservoir mounting hole 34 for mounting the reservoir 4 is formed so as to be recessed in the left area of the lower surface 11d of the base body 100 as illustrated in Fig. 4(b) . The suction valve mounting hole 38 for mounting the suction valve 6 is formed so as to be recessed in the right area of the lower surface 11d of the base body 100. The reservoir mounting hole 34 and the suction valve mounting hole 38 has the same diameter.

The pump mounting hole 31 for mounting the pump 5a is formed so as to be recessed in the left side surface 11e of the base body 100 as illustrated in Fig. 3(c) . The pump mounting hole 31 for mounting the pump 5b is formed so as to be recessed in the right side surface 11f of the base body 100 as illustrated in Fig. 3(d). In the pump mounting holes 31, 31, the pumps 5a, 5b engages cam members, not illustrated, provided on an output shaft of the electric motor 200.

In the control housing 300 (see Fig. 1), an electromagnetic coil to be connected to the control device 400, not illustrated, is provided. The electromagnetic coil is attached to the inlet valve 2, the outlet valve 3, and the cut valve 7a protruding from the base body 100. The control housing 300 is integrally secured to the front surface 11a of the base body 100 in a state of covering the inlet valve 2, the outlet valve 3, the cut valve 7a, the hydraulic pressure sensor 9, and the bus bar.

The flow path of the flow path component provided on the base body 100 will now be described in detail. Note that, when describing the front surface 11a, the rear surface 11b, the upper surface 11c, the lower surface 11d, the left side surface 11e, and the right side surface 11f of the flow path component (base body 100), respective drawings in Fig. 3 and respective drawings in Fig. 4 are to be referred to.

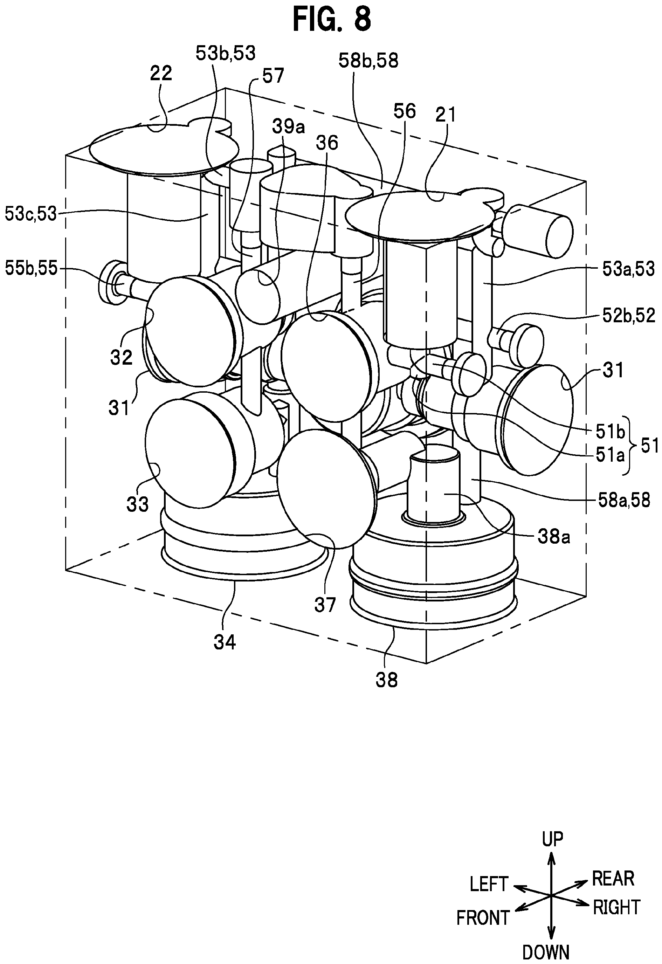

As illustrated in Figs. 5 (a), (b), Fig. 8, and Fig. 9, the inlet port 21 is a bottomed cylindrical hole, and communicates with the cut valve mounting hole 36 via a first flow path 51 (see Fig. 8). The first flow path 51 includes a vertical hole 51a drilled from a bottom portion of the inlet port 21 toward the lower surface 11d of the base body 100, and a lateral hole 51b drilled from the right side surface 11f of the base body 100 toward the cut valve mounting hole 36. The lateral hole 51b intersects with the vertical hole 51a at the intermediate portion thereof. The left end portion of the lateral hole 51b reaches a side portion of the cut valve mounting hole 36.

Here, the flow path extending from the bottom portion of the inlet port 21 through the first flow path 51 to the side portion of the cut valve mounting hole 36 corresponds to the output hydraulic pressure line A illustrated in Fig. 2.

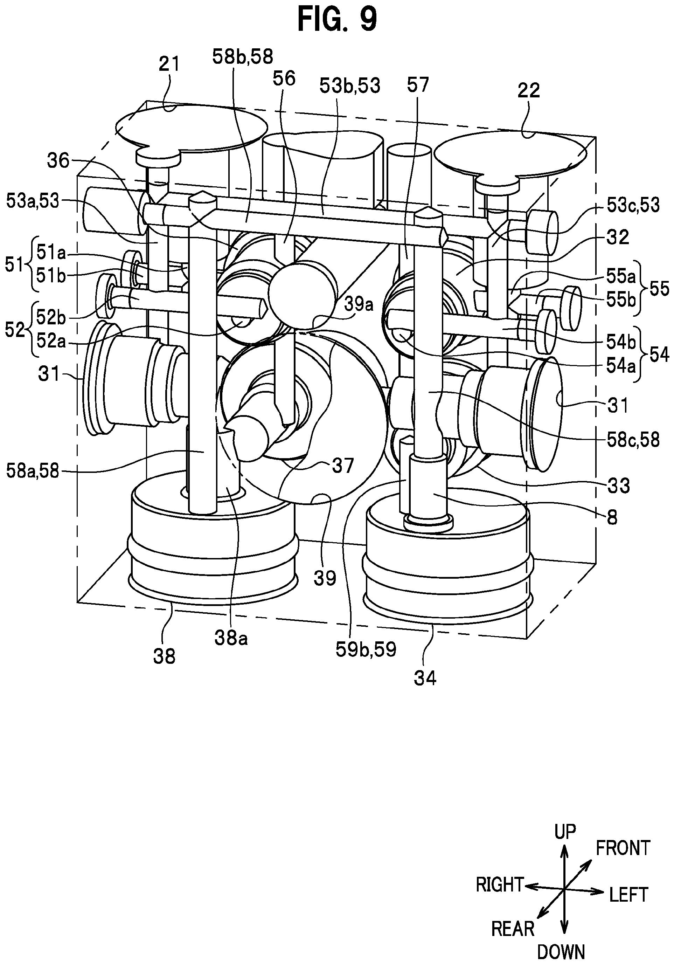

The cut valve mounting hole 36 is a bottomed and shouldered cylindrical hole. The cut valve mounting hole 36 communicates with the inlet valve mounting hole 32 through a second flow path 52, a third flow path 53, and a fourth flow path 54 as illustrated in Fig. 9. The second flow path 52 includes a lateral hole 52a drilled from a bottom portion of the cut valve mounting hole 36 toward the rear surface 11b of the base body 100 and a lateral hole 52b drilled from the right side surface 11f of the base body100 toward the left side surface 11e. The left end portion of the lateral hole 52b communicates with a rear end portion of the lateral hole 52a.

The third flow path 53 includes a vertical hole 53a, a lateral hole 53b, and a vertical hole 53c. The vertical hole 53a, the lateral hole 53b, and the vertical hole 53c form a flow path of an inverted angular U shape (the inverted recessed shape) extending between left and right of the base body 100 in rear view.

The vertical hole 53a is drilled from the upper surface 11c of the base body 100 in the right area toward the lower surface 11d. A lower end portion of the vertical hole 53a extends up to the side portion of the right pump mounting hole 31. A lower portion of the vertical hole 53a intersects with the lateral hole 52b of the second flow path 52.

The lateral hole 53b is drilled from the left side surface 11e of the base body 100 toward the right side surface 11f. A right end portion of the lateral hole 53b intersects with an upper portion of the vertical hole 53a.

The vertical hole 53c is drilled from the upper surface 11c of the base body 100 in the left area toward the lower surface 11d. A lower end portion of the vertical hole 53c extends up to the side portion of the left pump mounting hole 31. An upper portion of the vertical hole 53c communicates with the left end portion of the lateral hole 53b.

The fourth flow path 54 includes a lateral hole 54a drilled from a bottom portion of the inlet valve mounting hole 32 toward the rear surface 11b of the base body 100 and a lateral hole 54b drilled from the left side surface 11e of the base body 100 toward the right side surface 11f. A right end portion of the lateral hole 54b communicates with a rear end portion of the lateral hole 54a.

The outlet port 22 is a bottomed cylindrical hole and communicates with the inlet valve mounting hole 32 via a fifth flow path 55 (see Fig. 5(a)). The fifth flow path 55 includes a vertical hole 55a drilled from a bottom portion of the outlet port 22 toward the lower surface 11d of the base body 100, and a lateral hole 55b drilled from the left side surface 11e of the base body 100 toward the inlet valve mounting hole 32. The lateral hole 55b intersects with the vertical hole 55a at an intermediate portion thereof. The right end portion of the lateral hole 55b reaches a side portion of the inlet valve mounting hole 32. The inlet valve mounting hole 32 is a bottomed and shouldered cylindrical hole.

Here, the flow path extending up to the inlet valve mounting hole 32 through the second flow path 52, the third flow path 53, and the fourth flow path 54, and further reaches the outlet port 22 through the fifth flow path 55 corresponds to the wheel hydraulic pressure line B illustrated in Fig. 2. Also, the flow path made of vertical hole 53a and the vertical hole 53c of the third flow path 53 corresponds to the discharge hydraulic pressure lines C, C illustrated in Fig. 2.

A sixth flow path 56 intersects in the vertical direction with the side portion of the cut valve mounting hole 36 as illustrated in Fig. 8. The sixth flow path 56 includes a vertical hole drilled from the upper surface 11c of the base body 100 in the right area toward the lower surface 11d. A lower end portion of the sixth flow path 56 extends up to the side portion of the sensor mounting hole 37.

The sensor mounting hole 37 is a bottomed and shouldered cylindrical hole. A bottom portion of the sensor mounting hole 37 is directly connected to the one-way valve mounting hole 38a of the suction valve mounting hole 38 disposed rearward thereof, and the sensor mounting hole 37 communicates with the one-way valve mounting hole 38a via the connected portion as illustrated in Fig. 9.

Here, the flow path formed at the connecting portion between the sensor mounting hole 37 and the one-way valve mounting hole 38a corresponds to the branch hydraulic line A1 illustrated in Fig. 2.

A seventh flow path 57 intersects in the vertical direction with the side portion of the inlet valve mounting hole 32 as illustrated in Fig. 8. The seventh flow path 57 includes a vertical hole drilled from the upper surface 11c of the base body 100 in the left area toward the lower surface 11d. A lower end portion of the seventh flow path 57 extends up to the side portion of the outlet valve mounting hole 33.

The outlet valve mounting hole 33 is a bottomed and shouldered cylindrical hole. The outlet valve mounting hole 33 communicates with the reservoir mounting hole 34 via a ninth flow path 59 as illustrated in Fig. 6(b). The ninth flow path 59 includes a lateral hole 59a drilled from a bottom portion of the outlet valve mounting hole 33 toward the rear surface 11b of the base body 100 and a vertical hole 59b drilled from the bottom surface of the reservoir mounting hole 34 toward the upper surface 11c of the base body 100. An upper end portion of the vertical hole 59b communicates with a rear end portion of the lateral hole 59a. The reservoir mounting hole 34 is a bottomed cylindrical hole.

Here, the flow path extending up to the reservoir mounting hole 34 through the ninth flow path 59 corresponds to the release line D illustrated in Fig. 2.

The suction valve mounting hole 38 is a bottomed cylindrical hole. The suction valve mounting hole 38 and the reservoir mounting hole 34 communicate with each other via an eighth flow path 58 as illustrated in Fig. 9. The eighth flow path 58 includes a vertical hole 58a, a lateral hole 58b, and a vertical hole 58c. The vertical hole 58a, the lateral hole 58b, and the vertical hole 58c form a flow path of an inverted angular U shape (the inverted recessed shape) extending between left and right of the base body 100 in rear view.

The vertical hole 58a is drilled from the bottom surface of the suction valve mounting hole 38 toward the upper surface 11c of the base body 100 in the right area. An intermediate portion of the vertical hole 58a intersects with the side portion of the right pump mounting hole 31, which serves as an intake port. The vertical hole 58a functions as a first pump intake path connecting the suction valve 6 and the one pump 5a.

The vertical hole 58c is drilled from a bottom surface of the reservoir mounting hole 34 toward the upper surface 11c of the base body 100 in the left area. An intermediate portion of the vertical hole 58c intersects with the side portion of the left pump mounting hole 31, which serves as an intake port. The vertical hole 58c functions as a second pump intake path connecting the reservoir 4 and the other pump 5b.

The lateral hole 58b is drilled from the right side surface 11f of the base body 100 toward the left side surface 11e. A right portion of the lateral hole 58b communicates with an upper end portion of the vertical hole 58a, and a left end portion of the lateral hole 58b communicates with an upper end portion of the vertical hole 58c. The lateral hole 58b functions as a third pump intake path for connecting the vertical hole 58a and the vertical hole 58c.

In this configuration, the reservoir 4, the suction valve 6, and respective intake ports of the pumps 5a, 5b are connected by the eighth flow path 58, which functions as a single pump intake path.

Note that the check valve 8 (one-way valve) illustrated in Fig. 2 is mounted on a lower end portion of the vertical hole 58c.

A discharge side of the right pump mounting hole 31 closer to the inlet port 21 communicates with the fourth flow path 54 in the left area via the third flow path 53 and communicates with the inlet valve mounting hole 32 via the fourth flow path 54. The discharge side of the pump mounting hole 31, after having communicated with the inlet valve mounting hole 32, communicates with the outlet port 22 via the fifth flow path 55.

An intake side of the right pump mounting hole 31 communicates with the vacuum chamber 6a of the suction valve mounting hole 38 in the left area via the vertical hole 58a of the eighth flow path 58. Further, the intake side of the right pump mounting hole 31 communicates with the intake side of the left pump mounting hole 31 and the reservoir mounting hole 34 via the eighth flow path 58.

In contrast, the discharge side of the left pump mounting hole 31 closer to the outlet port 22 communicates with the inlet valve mounting hole 32 via the vertical hole 53c of the third flow path 53 and the fourth flow path 54 and, from the inlet valve mounting hole 32, communicates with the outlet port 22 via the fifth flow path 55. Further, the intake side of the left pump mounting hole 31 communicates with the reservoir mounting hole 34 via the vertical hole 58c of the eighth flow path 58. Further, the intake side of the left pump mounting hole 31 communicates with the intake side of the right pump mounting hole 31 and the suction valve mounting hole 38 via the eighth flow path 58.

Subsequently, a flow of the brake fluid when the normal braking, anti-locking braking control, and the pressurization control are performed will be described in detail.

### (Normal Braking)

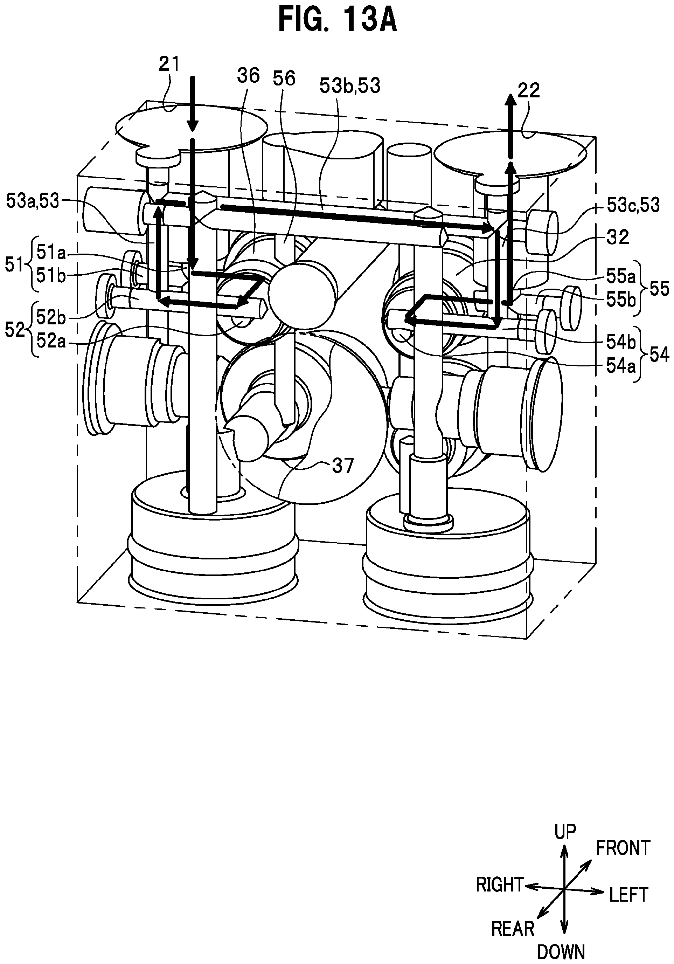

In the normal braking, the suction valve 6 is in the valve-closed state, and the normally-opened solenoid valve, which serves as the cut valve 7a, is in the valve-opened state as described above. Accordingly, as illustrated in Fig. 13A, the brake fluid inflowing from the inlet port 21 flows into the cut valve mounting hole 36 through the first flow path 51 and flows into the second flow path 52 through the interior of the solenoid valve in the valve-opened state. The brake fluid flowed into the second flow path 52 then flows from the second flow path 52 into the inlet valve mounting hole 32 in the left area via the third flow path 53 and the fourth flow path 54.

The brake fluid flowed into the inlet valve mounting hole 32 passes in the interior of the inlet valve 2 in the valve-opened state, flows into the outlet port 22 via the fifth flow path 55, and reaches the wheel brake R through the outlet port 22.

Note that the brake fluid flowed from the inlet port 21 through the first flow path 51 into the cut valve mounting hole 36 flows into the sensor mounting hole 37 through the sixth flow path 56. Then, the brake hydraulic pressure from the master cylinder M is measured by the hydraulic pressure sensor 9, and the measured value is retrieved by the control device 400 as needed.

### (Anti-Locking Braking Control)

Although illustration of arrows indicating the flow of the brake fluid is omitted, when decreasing the brake hydraulic pressure acting on the wheel brake R, for example, by the anti-locking braking control, the inlet valve 2 is brought into the valve-closed state and the outlet valve 3 is brought into the valve-opened state by the control device 400 as described above. Accordingly, the brake fluid acting on the wheel brake R flows into the side portion of the inlet valve mounting hole 32 through the outlet port 22 and the fifth flow path 55.

The brake fluid flowed into the inlet valve mounting hole 32 then flows into the outlet valve mounting hole 33 through the seventh flow path 57 located on a lateral side without flowing into the fourth flow path 54 as the inlet valve 2 is in the valve-closed state.

The brake fluid flowed into the outlet valve mounting hole 33 then flows into the ninth flow path 59 through the interior of the outlet valve 3, being in the valve-opened state, and flows into the reservoir mounting hole 34. Note that when executing the anti-locking braking control, the motor 200 is driven by the control device 400 and the pumps 5a, 5b are operated. Consequently, the brake fluid stored in the reservoir mounting hole 34 is sucked into the pump mounting holes 31, 31 via the eighth flow path 58 and is discharged into the third flow path 53.

The brake fluid discharged to the third flow path 53 flows through the third flow path 53 from the left area to the right area of the base body 100 and flows into the cut valve mounting hole 36 through the second flow path 52. The brake fluid flowed into the cut valve mounting hole 36 flows into the first flow path 51 through the interior of the cut valve 7a, being in the valve-opened state, and is returned to the master cylinder M side through the inlet port 21.

Next, when maintaining the brake hydraulic pressure acting on the wheel brake R (see Fig. 2) constant by the anti-locking braking control, the inlet valve 2 and the outlet valve 3 are brought into the valve-closed state by the control device 400 as described above, and thus neither inflow of the brake fluid to the fifth flow path 55 nor outflow of the brake fluid from the fifth flow path 55 occurs.

When increasing the brake hydraulic pressure acting on the wheel brake R (see Fig. 2) by the anti-locking braking control, the inlet valve 2 is brought into the valve-opened state and the outlet valve 3 is brought into the valve-closed state by the control device 400 as described above, and thus the flow of the brake fluid becomes the same as the case of the normal brake control.

### (Pressurization Control)

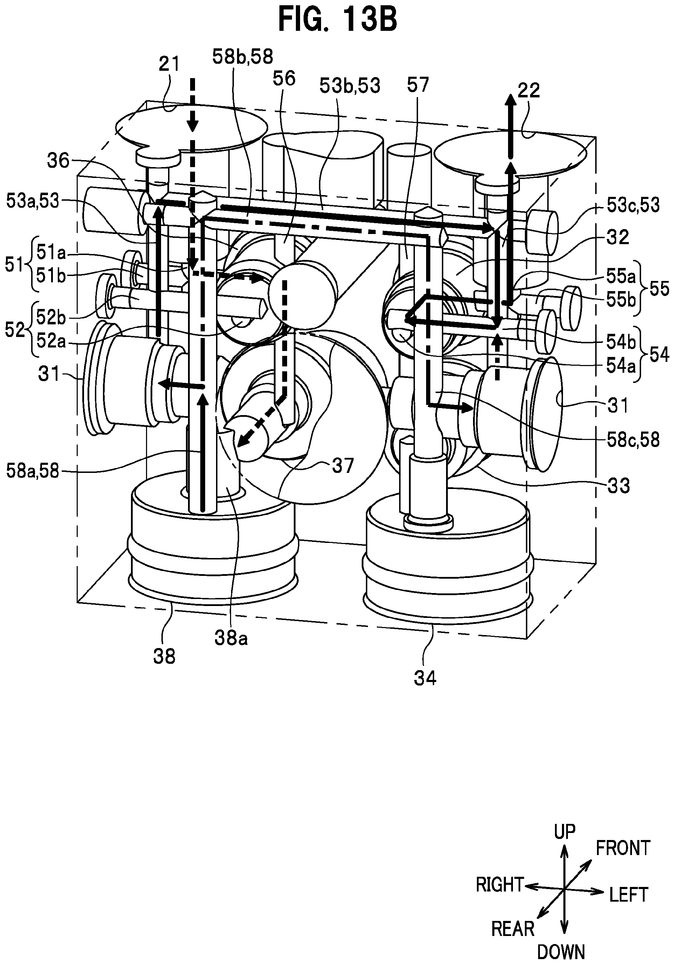

In the pressurization control in the non-operating state in which the brake pedal BP is not operated, the cut valve 7a is brought into the valve-closed state by the control device 400, and the motor 200 is actuated, so that the pumps 5a, 5b (see Fig. 2, the same applies hereinafter) are driven as described above. When the pumps 5a, 5b are driven, the brake fluid in the eighth flow path 58 is sucked by the pumps 5a, 5b, and a vacuum is created in the vacuum chamber 6a of the suction valve 6 communicating with the eighth flow path 58 as illustrated in Fig. 13B.

Accordingly, as illustrated in Fig. 11C, the thin film drive unit 642 of the diaphragm 64 is subject to elastic deformation toward the one-way valve 61, and the upper surface of the plunger 62 comes into contact with the lower surface of the large diameter valve 613 to push the large diameter valve 613 upward. This upward pushing causes the large diameter valve 613 to move away from the seat.

Accordingly, as illustrated in Fig. 13B, the brake fluid on the master cylinder M side flows into the cut valve mounting hole 36 from the inlet port 21 through the first flow path 51 (see dotted arrows in the drawing). The brake fluid flowing into the cut valve mounting hole 36 flows into the sixth flow path 56 through the lateral side of the cut valve 7a in the valve-closed state and flows into the one-way valve mounting hole 38a through the interior of the sensor mounting hole 37 (see dotted arrows in the drawing). The brake fluid flowed into the one-way valve mounting hole 38a then flows into the vacuum chamber 6a and is sucked into one pump mounting hole 31 through the vertical hole 58a of the eighth flow path 58 (see solid arrows in the drawing). In association with this, the brake fluid flowed into the vacuum chamber 6a is sucked into the other pump mounting hole 31 through the vertical hole 58a, the lateral hole 58b, and the vertical hole 58c of the eighth flow path 58 (see dash-dot-dash arrow in the drawing).

The brake fluid sucked by the one pump mounting hole 31 is pressurized by the one pump 5a (for example, see Fig. 12(a)), flows from the third flow path 53 into the inlet valve mounting hole 32 through the fourth flow path 54, and then is discharged to the wheel brake R from the outlet port 22 through the fifth flow path 55 (see dotted arrows in the drawing).

The brake fluid sucked by the other pump mounting hole 31 is pressurized by the pump 5b at a timing shifted from the one pump 5a by half a cycle (for example, see Fig. 12(b)), flows into the inlet valve mounting hole 32 from the third flow path 53 (vertical hole 53c) through the fourth flow path 54, and then is discharged to the wheel brake R from the outlet port 22 through the fifth flow path 55 (see dash-dot-dash arrows and dotted arrows in the drawing).

In other words, when the one pump 5a discharges the brake fluid, the other pump 5b sucks the brake fluid, and when the one pump 5a sucks the brake fluid, the other pump 5b discharges the brake fluid. Accordingly, the brake fluid with alleviated pulsation is discharged from the pumps 5a, 5b as illustrated in Fig. 12(c), and applies a brake on the wheel.

In the pressurization control in the operating state in which the brake pedal BP is operated, the cut valve 7a is brought into the valve-closed state by the control device 400, and the motor 200 is actuated, so that the pumps 5a, 5b (see Fig. 2, the same applies hereinafter) are driven in the same manner. When the pumps 5a, 5b are driven, a vacuum is created in the vacuum chamber 6a of the suction valve 6 that communicates with the eighth flow path 58, which causes elastic deformation of the thin film drive unit 642 of the diaphragm 64 toward the one-way valve 61 in the same manner.

When a force of the plunger 62 pushing the small diameter valve 614 upward exceeds a resultant force of the pressing force on the master cylinder M side and the biasing force of the valve spring 614s acting on the small diameter valve 614, the small diameter valve 614 moves away from the valve seat 613b.

Accordingly, as illustrated in Fig. 13B, the brake fluid on the master cylinder M side flows into the one-way valve mounting hole 38a through the inlet port 21, the first flow path 51, the cut valve mounting hole 36, the sixth flow path 56, and the interior of the sensor mounting hole 37. The brake fluid flowed into the one-way valve mounting hole 38a is then sucked by the pump mounting holes 31, 31 from the vacuum chamber 6a though the eighth flow path 58, and is discharged to the wheel brake R from the outlet port 22 through the third flow path 53, the fourth flow path 54, the inlet valve mounting hole 32, and the fifth flow path 55.

Note that when the brake fluid on the master cylinder M side flows into the vacuum chamber 6a, the brake hydraulic pressure on the master cylinder M side acts on the diaphragm 64, and the thin film drive unit 642 returns toward the lid member 65 as described above.

While the pumps 5a, 5b are operated, the above-described actions are repeatedly performed and the brake fluid pressurized by the pumps 5a, 5b repeatedly acts on the wheel brake R.

In the brake hydraulic pressure control device U of the present embodiment as described above, the device may be formed to have a compact profile by disposing respective components such as the inlet valve 2 efficiently on one surface (the front surface 11a) of the base body 100.

The present invention may also be configured by utilizing a base body in a unit of an existing vehicle anti-locking braking control device having two (2-ch) brake systems.

The base body of the existing 2-ch device employs a layout in which, when one side surface of the base body is divided into two areas by a reference plane, the inlet valve, the outlet valve, and the reservoir are generally disposed in each area.

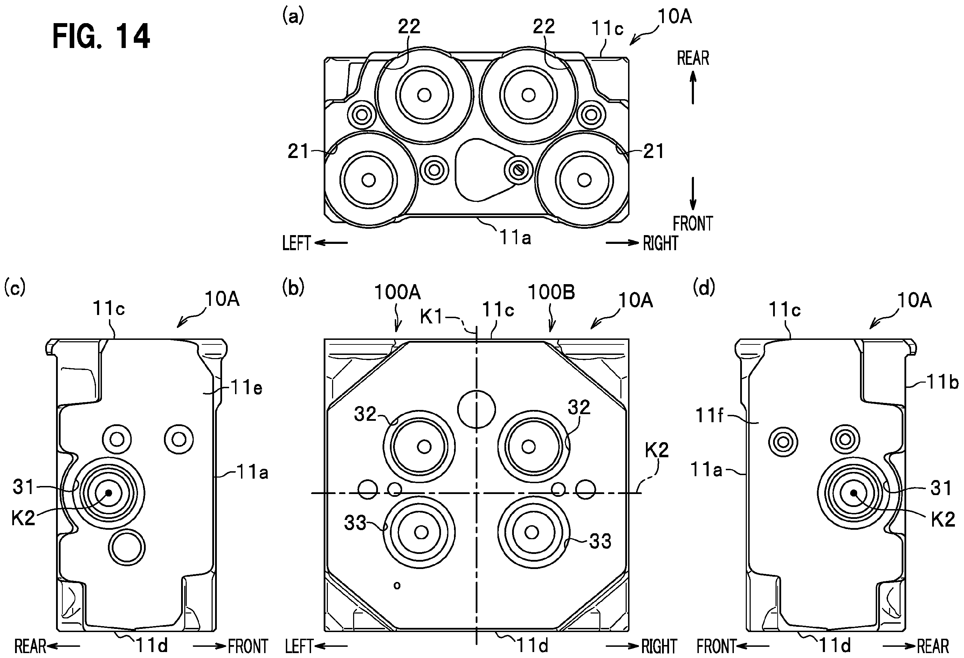

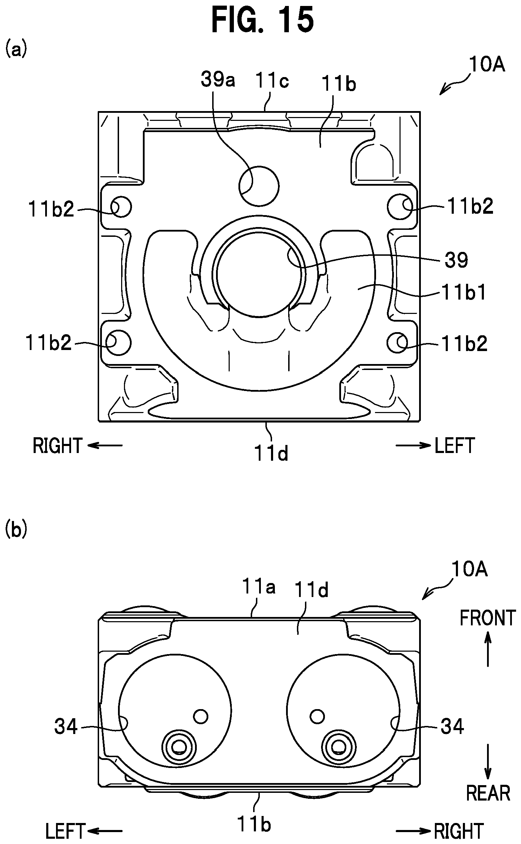

Specifically, as illustrated in Fig. 14 to Fig. 17, a base body 10A which can configure the two brake systems may be commonly used as the base body 100 of the present embodiment.

The base body 10A includes flow path components 100A, 100B corresponding to the two brake systems. The inlet valve 2, the outlet valve 3, the reservoir 4, and the pump 5 are attached to the base body 10A for each of the flow path components 100A, 100B. The electric motor 200 serves as a common drive source of the respective flow path components 100A, 100B.

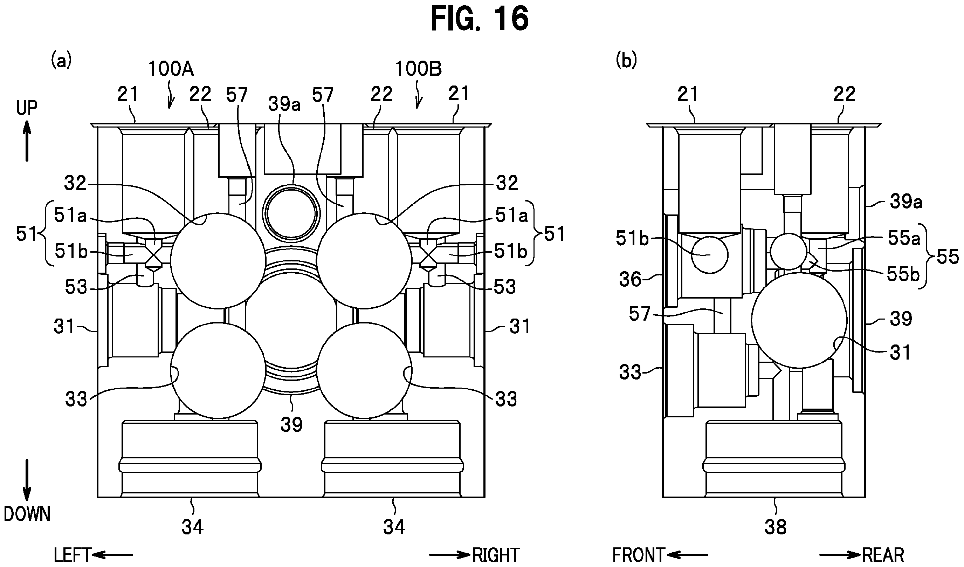

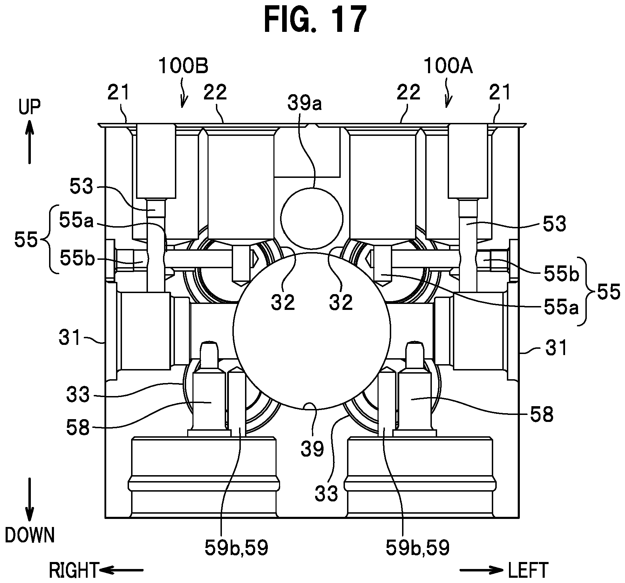

In the base body 10A, the flow path component 100A is formed on a left half and the flow path component 100B is formed on a right half as illustrated in Fig. 16(a) and Fig. 17. The flow path components 100A, 100B are formed substantially in lateral symmetry, and have the same internal configurations.

In each drawing, the same parts as the base body 100 of the present embodiment are designated by the same reference signs. Note that the base body 10A is different from the base body 100 in the present embodiment in that the suction valve 6, the regulator 7 and the hydraulic pressure sensor 9 are not provided and thus parts of the flow path relating to these members are not provided.

The flow path component 100A on the left half of the whole divided by a reference plane K1 is similar to the flow path component in the left area of the base body 100 of the present embodiment. In other words, the flow path component of the present embodiment may be machined by the substantially same steps as the steps for machining the flow path component 100A in the base body 10A of the two brake systems.

The inlet valve mounting hole 32 and the outlet valve mounting hole 33 of the flow path component 100B on the right half correspond to the cut valve mounting hole 36 and the sensor mounting hole 37 of the flow path component of the present embodiment. In other words, the cut valve mounting hole 36 and the sensor mounting hole 37 of the present embodiment may be machined by the substantially same steps as the steps for machining the inlet valve mounting hole 32 and the outlet valve mounting hole 33 of the flow path component 100B.

In the housing, not illustrated, to be attached to the base body 10A, four electromagnetic coils in total are required. However, the present embodiment needs only three electromagnetic coils in total. Therefore, when the housing of the base body 10A is used on the base body 100 of the present embodiment, a free space in which the electromagnetic coil is not mounted is created in the housing 300, and the hydraulic pressure sensor 9 may be disposed by using this free space. By using the free space effectively, the hydraulic pressure sensor 9 which is cost-effective and has a relatively large outer shape may be disposed.

In the present embodiment, the cut valve 7a is disposed at a position opposing the inlet valve 2 with the reference plane Xl interposed therebetween, and the hydraulic pressure sensor 9 is disposed at a position opposing the outlet valve 3 with the reference plane X1 interposed therebetween. The cut valve 1 and the inlet valve 2 are both the normally-opened solenoid valve and are the solenoid valves having the same outer shape. Therefore, the solenoid valve, which is the same as the normally-opened solenoid valve to be mounted on the inlet valve 2, may be used as the cut valve 7a. The electromagnetic coils, which is the same electromagnetic coil to be mounted on the inlet valve 2, may also be used for the cut valve 7a.

Therefore, for example, the electromagnetic coils or the housing used for the base body 10A of the two brake systems described above may be commonly used as the electromagnetic coils and the housing 300 of the present embodiment. Therefore, cost reduction is achieved.

In the brake hydraulic pressure control device U of the present embodiment as described above, the device may be formed to have a compact profile by disposing respective components such as the inlet valve 2 efficiently on one surface (the front surface 11a) of the base body 100, so that the suction valve mounting hole 38 having a large diameter may be desirably secured in a limited space. Accordingly, the diaphragm 64 having a larger effective diameter L1 can be desirably disposed. Therefore, the workability of the brake hydraulic pressure control device U is improved.

By utilizing the layout of the base body in the unit of the existing vehicle anti-locking braking control device having two (2-ch) brake systems, the inlet valve 2, the outlet valve 3, and the reservoir 4 can be disposed in one area, and the regulator 7, the suction valve 6, and the hydraulic pressure sensor 9 can be disposed in the other area. Accordingly, the vehicle brake hydraulic pressure control device U of the present invention may be manufactured by diverting or commonly using manufacturing equipment for the existing vehicle brake hydraulic pressure control device, so that reduction of manufacturing costs is achieved.

For example, the brake hydraulic pressure control device U may be configured to be capable of controlling boosting while having a size substantially equivalent to the base body of the 2-ch vehicle anti-locking braking control device used especially for a vehicle with a bar handle. Therefore, miniaturization is achieved while avoiding upsizing of the device, and thus mountability on the vehicles with a bar handle is also improved.

In addition, since the hydraulic pressure sensor 9 is capable of forming into the same size as the outlet valve 3, relatively cost-effective sensors may be used. This configuration also contributes to miniaturization of the entire device while avoiding provability of interference with other valves.

Furthermore, since the reservoir 4 and the suction valve 6 are disposed in symmetry with respect to the reference plane X1, and the reservoir mounting hole 34 and the suction valve mounting hole 38 have the same shape, the suction valve 6 may be disposed by desirably using the base body 10A in the unit of the existing 2-ch vehicle anti-locking braking control device.

Since the suction valve 6 of a mechanical type is used, the suction valve 6 can be designed and attached to be matched with the shape of the existing reservoir mounting hole 34, which provides superior assembleability.

Since the reservoir 4 and the suction valve 6 are disposed on the lower surface 11d adjacent to the front surface 11a of the base body 100, the reservoir 4 and the suction valve 6 may be disposed without increasing the front surface 11a of the base body 100 where the inlet valve 2 and the like are disposed more than necessary. Therefore, the entire device can be miniaturized.

Since the reservoir 4, the suction valve 6 and the intake ports of the respective pumps 5a, 5b are connected by the eighth flow path 58, which is a single pump intake path, boosting by the pair of pumps 5a, 5b is achieved based on the brake fluid from the reservoir 4 side and the brake fluid from the suction valve 6 side. Therefore, enhancement of boosting capacity is achieved. In addition, the layout with the two pumps provided on the base body in the unit of the existing 2-ch vehicle anti-locking braking control device may be effectively utilized. Therefore, cost reduction is achieved.

Furthermore, the pump intake path includes a vertical hole 85a, which corresponds to the first pump intake port that connects the suction valve 6 and the intake port of the one pump 5a, and a vertical hole 85c, which corresponds to the second pump intake path that connects the reservoir 4 and the intake port of the other pump 5b. A lateral hole 85b, which corresponds to the third pump intake path that connects the first pump intake path and the second pump intake path is further provided. Therefore, the intake path on the suction valve 6 side and the intake path on the reservoir 4 side, which are disposed in symmetry with respect to the reference plane X1, can easily be connected. Accordingly, the brake fluid on the suction valve 6 side and on the reservoir 4 side can be easily sucked via the eighth flow path 58, so that desirable enhancement of the boosting capacity is achieved.

Since the motor 200 is disposed on the rear surface 11b of the base body 100, and the bas bar is disposed between the eighth flow path 58 and the output shaft of the motor 200, the position of the bus bar is optimized, and miniaturization of the entire device is achieved. Since the discharge cycles of the pair of pumps 5a, 5b are differentiated by half a cycle, pulsation caused while increasing the brake hydraulic pressure may desirably be reduced.

The suction valve 6 may be desirably disposed in the right area of the base body 100 by using the suction valve mounting hole 38 of the base body 100.

Furthermore, the diaphragm 64 having a large diameter may be disposed by using the reservoir mounting hole of the base body in the unit of the existing vehicle anti-locking braking control device having the two systems (2-ch) of brake systems.

The suction valve 6 includes the normally-closed one-way valve 61, the plunger 62, and the diaphragm 64, and configured to push the plunger 62 by creating a vacuum on the intake port side by the operation of the pumps 5a, 5b and bias the one-way valve 61 in the opening direction. Therefore, the suction valve 6 operated by the diaphragm 64 is achieved by a relatively simple component configuration. In addition, because of the relatively simple component configuration, reliability of operation is also high.

Further, the diaphragm 64 having the effective diameter L1 larger than the inner diameter L3 of the one-way valve mounting hole 38a enables enhancement of workability of the diaphragm 64 even when the brake hydraulic pressure from the master cylinder M side is relatively high. Therefore, improvement of the openability of the suction valve 6 is achieved.

Although the embodiment of the present invention has been described thus far, the present invention is not limited to the embodiment described above, and modifications may be made without departing the scope of the present invention.

In the embodiment described above, the brake hydraulic pressure control device U relating to the rear wheel brake R has been described. However, the brake hydraulic pressure control device U relating to the front wheel brake is also applicable by replacing the brake pedal BP with a brake operation element.

In addition, the suction valve mounting hole 38 may be formed to have an inner diameter different from that of the reservoir mounting hole 34.

Furthermore, the positions of the small diameter valve 614 or the large diameter valve 613 in the one-way valve 61 may be set as needed.

Furthermore, in the embodiment described above, although the description of the present invention has been directed to the one system (1-ch) of the brake system by utilizing the base body in the unit of the existing vehicle anti-locking braking control device having the two (2-ch) brake systems, the present invention is not necessarily limited to utilizing the base body in a 2-ch unit.

### Reference Signs List

2 inlet valve
3 outlet valve
5a, 5b pump
6 suction valve
38 suction valve mounting hole (mounting hole)
61 one-way valve
62 plunger
64 diaphragm
100 base body
L1 effective diameter
L3 inner diameter of one-way valve mounting hole (inner diameter of accommodating part)
M master cylinder
R wheel brake
U vehicle brake hydraulic pressure control device

## Claims

1. A vehicle brake hydraulic pressure control device (U) equipped with a base body (100) for attaching functional components and being disposed between a master cylinder (M) and a wheel brake (R), wherein
the base body (100) comprises:
an inlet valve (2) made of a normally-opened solenoid valve configured to connect or block between the master cylinder (M) and the wheel brake (R);
an outlet valve (3) made of a normally-closed solenoid valve configured to connect or block between the wheel brake (R) and a reservoir (4);
a pump (5a, 5b) configured to suck brake fluid on the reservoir side and discharge the brake fluid toward the master cylinder (M) and the wheel brake (R);
a regulator (7) connected between the master cylinder (M) and a discharge port of the pump (5a, 5b) and made of a normally-opened solenoid valve configured to regulate a brake hydraulic pressure on the wheel brake side;
a suction valve (6) connected between the master cylinder (M) and an intake port of the pump (5a, 5b) and configured to open while increasing the brake hydraulic pressure by the pump (5a, 5b); and
a hydraulic pressure sensor (9) configured to detect the brake hydraulic pressure of the master cylinder (M),
when one side surface (11a) of the base body (100) is divided into two areas by a reference plane (X1),
the inlet valve (2), the outlet valve (3), and the reservoir (4) are disposed in one area and the regulator (7), the suction valve (6), and the hydraulic pressure sensor (9) are disposed in other area, and
the inlet valve (2) and the regulator (7) are disposed in symmetry with respect to the reference plane (X1), and
**characterised in that** the outlet valve (3) and the hydraulic pressure sensor (9) are disposed in symmetry with respect to the reference plane (X1), and the reservoir (4) and the suction valve (6) are disposed in symmetry with respect to the reference plane (X1).

2. The vehicle brake hydraulic pressure control device according to Claim 1, wherein the suction valve (6) is opened by a pressure difference between a brake hydraulic pressure on the master cylinder side and a brake hydraulic pressure on an intake port side of the pump (5a, 5b), at which a vacuum is created when the pump (5a, 5b) is operated.

3. The vehicle brake hydraulic pressure control device according to Claim 1 or Claim 2, wherein the reservoir (4) and the suction valve (6) are disposed on a surface (11d) adjacent to one side surface (11a) of the base body (100).

4. The vehicle brake hydraulic pressure control device according to any one of Claims 1 to 3, wherein the pump comprises a pair of the pumps (5a, 5b) disposed in symmetry with respect to the reference plane (X1), and
the reservoir (4), the suction valve (6), and the intake port of each of the pumps (5a, 5b) are connected by a single pump intake path (58).

5. The vehicle brake hydraulic pressure control device according to Claim 4, wherein the pump intake path (58) comprises: a first pump intake path (58a) for connecting the suction valve (6) and an intake port of one of the pumps (5a) ;
a second pump intake path (58c) for connecting the reservoir (4) and an intake port of the other one of the pumps (5b), and
a third pump intake path (58b) for connecting the first pump intake path (58a) and the second pump intake path (58c).

6. The vehicle brake hydraulic pressure control device according to Claim 4 or 5, further comprising a motor (200) configured to drive the pair of pumps (5a, 5b), wherein
the motor (200) is disposed on other side surface (11b), which is on an opposite side from one side surface (11a) of the base body (100), and
a bus bar provided on the motor (200) is disposed between the pump intake path (58) and an output shaft of the motor (200).

7. The vehicle brake hydraulic pressure control device according to any one of Claims 2 to 6, wherein
the base body (100) comprises a mounting hole (38) for accommodating the suction valve (6) in the other area,
the suction valve (6) comprises a diaphragm (64) operated by a pressure difference between a brake hydraulic pressure on the master cylinder side and a brake hydraulic pressure on the intake port side of the pump (5a, 5b), at which a vacuum is created when the pump (5a, 5b) is operated, and
the diaphragm (64) is disposed in the mounting hole (38) .

8. The vehicle brake hydraulic pressure control device according to Claim 7, wherein
the suction valve (6) comprises a normally-closed one-way valve (61) and a plunger (62) configured to contact with and open a valve body (613, 614) of the one-way valve (61), and
the diaphragm (64) pushes the plunger (62) by a vacuum created on the intake port side of the pump (5a, 5b) by the operation of the pump (5a, 5b) and biases the one-way valve to a valve opening direction.

9. The vehicle brake hydraulic pressure control device according to Claim 8, wherein the one-way valve (61) is accommodated in an accommodating part (38a) formed in the mounting hole (38), and
an effective diameter (L1) of the diaphragm (64) is larger than an inner diameter (L3) of the accommodating part (38a) .

## Patentansprüche

1. Hydraulische Fahrzeugbremsen-Drucksteuervorrichtung (U), die mit einem Grundkörper (100) zum Befestigen von Funktionskomponenten ausgestattet ist und zwischen einem Hauptzylinder (M) und einer Radbremse (R) angeordnet ist, wobei
der Grundkörper (100) umfasst:
ein Einlassventil (2), das aus einem normalerweise geöffneten Magnetventil hergestellt ist und zum Verbinden oder Sperren zwischen dem Hauptzylinder (M) und der Radbremse (R) konfiguriert ist;
ein Auslassventil (3), das aus einem normalerweise geschlossenen Magnetventil hergestellt ist und zum Verbinden oder Sperren zwischen der Radbremse (R) und einem Vorratsbehälter (4) konfiguriert ist;
eine Pumpe (5a, 5b), die dazu konfiguriert ist, Bremsflüssigkeit an der Vorratsbehälterseite anzusaugen und die Bremsflüssigkeit in Richtung des Hauptzylinders (M) und der Radbremse (R) abzugeben;
einen Regler (7), der zwischen dem Hauptzylinder (M) und einer Auslassöffnung der Pumpe (5a, 5b) verbunden ist und aus einem normalerweise geöffneten Magnetventil hergestellt ist, das dazu konfiguriert ist, einen hydraulischen Bremsdruck an der Radbremsenseite zu regulieren;
ein Saugventil (6), das zwischen dem Hauptzylinder (M) und einer Einlassöffnung der Pumpe (5a, 5b) verbunden ist und dazu konfiguriert ist, sich zu öffnen, während der hydraulische Bremsdruck durch die Pumpe (5a, 5b) erhöht wird; und
einen Hydraulikdrucksensor (9), der dazu konfiguriert ist, den hydraulischen Bremsdruck des Hauptzylinders (M) zu erfassen,
wenn eine Seitenoberfläche (11a) des Grundkörpers (100) durch eine Referenzebene (X1) in zwei Bereiche unterteilt ist,
das Einlassventil (2), das Auslassventil (3) und der Vorratsbehälter (4) in einem Bereich angeordnet sind und der Regler (7), das Saugventil (6) und der Hydraulikdrucksensor (9) in einem anderen Bereich angeordnet sind und
das Einlassventil (2) und der Regler (7) symmetrisch zu der Referenzebene (X1) angeordnet sind, und
**dadurch gekennzeichnet, dass** das Auslassventil (3) und der Hydraulikdrucksensor (9) symmetrisch zu der Referenzebene (X1) angeordnet sind, und dass der Vorratsbehälter (4) und das Saugventil (6) symmetrisch zu der Referenzebene (X1) angeordnet sind.

2. Hydraulische Fahrzeugbremsen-Drucksteuervorrichtung nach Anspruch 1, wobei das Saugventil (6) durch einen Differenzdruck zwischen einem hydraulischen Bremsdruck an der Hauptzylinderseite und einem hydraulischen Bremsdruck an einer Einlassöffnungsseite der Pumpe (5a, 5b) geöffnet wird, bei dem ein Vakuum geschaffen wird, wenn die Pumpe (5a, 5b) betrieben wird.

3. Hydraulische Fahrzeugbremsen-Drucksteuervorrichtung nach Anspruch 1 oder Anspruch 2, wobei der Vorratsbehälter (4) und das Saugventil (6) auf einer Oberfläche (Deckel) angeordnet sind, die an eine Seitenoberfläche (11a) des Grundkörpers (100) angrenzt.

4. Hydraulische Fahrzeugbremsen-Drucksteuervorrichtung nach einem der Ansprüche 1 bis 3, wobei die Pumpe ein Paar von Pumpen (5a, 5b) umfasst, die symmetrisch zu der Referenzebene (X1) angeordnet sind, und
der Vorratsbehälter (4), das Saugventil (6) und die Ansaugöffnung jeder der Pumpen (5a, 5b) durch einen einzigen Pumpenansaugpfad (58) verbunden sind.

5. Hydraulische Fahrzeugbremsen-Drucksteuervorrichtung nach Anspruch 4, wobei der Pumpenansaugpfad (58) umfasst: einen ersten Pumpenansaugpfad (58a) zum Verbinden des Saugventils (6) mit einer Ansaugöffnung einer der Pumpen (5a);
einen zweiten Pumpenansaugpfad (58c) zum Verbinden des Vorratsbehälters (4) mit einer Ansaugöffnung der anderen der Pumpen (5b), und
einen dritten Pumpenansaugpfad (58b) zum Verbinden des ersten Pumpenansaugpfads (58a) mit dem zweiten Pumpenansaugpfad (58c).

6. Hydraulische Fahrzeugbremsen-Drucksteuervorrichtung nach Anspruch 4 oder 5, die weiter einen Motor (200) umfasst, der dazu konfiguriert ist, das Paar von Pumpen (5a, 5b) anzutreiben, wobei der Motor (200) auf der anderen Seitenoberfläche (11b) angeordnet ist, die sich auf einer entgegengesetzten Seite von einer Seitenoberfläche (11a) des Grundkörpers (100) befindet, und
eine an dem Motor (200) bereitgestellte Sammelschiene, die zwischen dem Pumpenansaugpfad (58) und einer Abtriebswelle des Motors (200) angeordnet ist.

7. Hydraulische Fahrzeugbremsen-Drucksteuervorrichtung nach einem der Ansprüche 2 bis 6, wobei
der Grundkörper (100) in dem anderen Bereich eine Montageöffnung (38) zum Unterbringen des Saugventils (6) umfasst,
wobei das Saugventil (6) eine Membran (64) umfasst, die von einem Differenzdruck zwischen einem hydraulischen Bremsdruck an der Hauptzylinderseite und einem hydraulischen Bremsdruck an der Einlassöffnungsseite der Pumpe (5a, 5b) betrieben wird, bei dem ein Vakuum geschaffen wird, wenn die Pumpe (5a, 5b) betrieben wird, und
die Membran (64) in der Montageöffnung (38) angeordnet ist.

8. Hydraulische Fahrzeugbremsen-Drucksteuervorrichtung nach Anspruch 7, wobei
das Saugventil (6) ein normalerweise geschlossenes Einwegventil (61) und einen Kolben (62) umfasst, der dazu konfiguriert ist, einen Ventilkörper (613, 614) des Einwegventils (61) zu kontaktieren und zu öffnen, und
die Membran (64) den Kolben (62) durch ein Vakuum, das durch den Betrieb der Pumpe (5a, 5b) an der Ansaugöffnungsseite der Pumpe (5a, 5b) geschaffen wird, drückt und das Einwegventil in eine Ventilöffnungsrichtung vorspannt.

9. Hydraulische Fahrzeugbremsen-Drucksteuervorrichtung nach Anspruch 8, wobei das Einwegventil (61) in einem Unterbringungsteil (38a) untergebracht ist, das in der Montageöffnung (38) gebildet ist, und
ein effektiver Durchmesser (L1) der Membran (64) größer als ein Innendurchmesser (L3) des Unterbringungsteils (38a) ist.

## Revendications

1. Dispositif de commande de pression hydraulique de frein de véhicule (U) équipé d'un corps de base (100) pour fixer des composants fonctionnels et étant disposé entre un maître-cylindre (M) et un frein de roue (R), dans lequel
le corps de base (100) comprend :
une soupape d'admission (2) faite d'une électrovanne normalement ouverte configurée pour être reliée ou se bloquer entre le maître-cylindre (M) et le frein de roue (R) ;
une soupape de sortie (3) faite d'une électrovanne normalement fermée configurée pour être reliée ou se bloquer entre le frein de roue (R) et un réservoir (4) ;
une pompe (5a, 5b) configurée pour aspirer du liquide de frein du côté réservoir et évacuer le liquide de frein vers le maître-cylindre (M) et le frein de roue (R) ;
un régulateur (7) relié entre le maître-cylindre (M) et un orifice de refoulement de la pompe (5a, 5b) et fait d'une électrovanne normalement ouverte configurée pour réguler une pression hydraulique de freinage du côté frein de roue ;
une soupape d'aspiration (6) reliée entre le maître-cylindre (M) et un orifice d'admission de la pompe (5a, 5b) et configurée pour s'ouvrir tout en augmentant la pression hydraulique de freinage par la pompe (5a, 5b) ; et
un capteur de pression hydraulique (9) configuré pour détecter la pression hydraulique de freinage du maître-cylindre (M),
lorsqu'une surface latérale (11a) du corps de base (100) est divisée en deux zones par un plan de référence (X1),
la soupape d'admission (2), la soupape de sortie (3) et le réservoir (4) sont disposés dans une zone et le régulateur (7), la soupape d'aspiration (6) et le capteur de pression hydraulique (9) sont disposés dans une autre zone, et
la soupape d'admission (2) et le régulateur (7) sont disposés en symétrie par rapport au plan de référence (X1), et
**caractérisé en ce que** la soupape de sortie (3) et le capteur de pression hydraulique (9) sont disposés en symétrie par rapport au plan de référence (X1), et le réservoir (4) et la soupape d'aspiration (6) sont disposés en symétrie par rapport au plan de référence (X1).

2. Dispositif de commande de pression hydraulique de frein de véhicule selon la revendication 1, dans lequel la soupape d'aspiration (6) est ouverte par une différence de pression entre une pression hydraulique de frein sur le côté maître-cylindre et une pression hydraulique de frein sur un côté orifice d'admission de la pompe (5a, 5b), à laquelle un vide est créé lorsque la pompe (5a, 5b) fonctionne.

3. Dispositif de commande de pression hydraulique de frein de véhicule selon la revendication 1 ou la revendication 2, dans lequel le réservoir (4) et la soupape d'aspiration (6) sont disposés sur une surface (couvercle) adjacente à une surface latérale (11a) du corps de base (100).

4. Dispositif de commande de pression hydraulique de frein de véhicule selon l'une quelconque des revendications 1 à 3, dans lequel la pompe comprend une paire de pompes (5a, 5b) disposées en symétrie par rapport au plan de référence (X1), et
le réservoir (4), la soupape d'aspiration (6) et l'orifice d'admission de chacune des pompes (5a, 5b) sont reliés par un seul chemin d'admission de pompe (58).

5. Dispositif de commande de pression hydraulique de frein de véhicule selon la revendication 4, dans lequel le chemin d'admission de pompe (58) comprend : un premier chemin d'admission de pompe (58a) pour relier la soupape d'aspiration (6) et un orifice d'admission de l'une des pompes (5a) ;
un deuxième chemin d'admission de pompe (58c) pour relier le réservoir (4) et un orifice d'admission de l'autre des pompes (5b), et
un troisième chemin d'admission de pompe (58b) pour relier le premier chemin d'admission de pompe (58a) et le deuxième chemin d'admission de pompe (58c).

6. Dispositif de commande de pression hydraulique de frein de véhicule selon la revendication 4 ou 5, comprenant en outre un moteur (200) configuré pour entraîner la paire de pompes (5a, 5b), dans lequel le moteur (200) est disposé sur une autre surface latérale (11b), qui se trouve sur un côté opposé à une surface latérale (11a) du corps de base (100), et
une barre omnibus prévue sur le moteur (200) est disposée entre le trajet d'admission de pompe (58) et un arbre de sortie du moteur (200).

7. Dispositif de commande de pression hydraulique de frein de véhicule selon l'une quelconque des revendications 2 à 6, dans lequel :
le corps de base (100) comprend un trou de montage (38) pour recevoir la soupape d'aspiration (6) dans l'autre zone,
la soupape d'aspiration (6) comprend un diaphragme (64) actionné par une différence de pression entre une pression hydraulique de frein sur le côté maître-cylindre et une pression hydraulique de frein sur le côté orifice d'admission de la pompe (5a, 5b), à laquelle un vide est créé lorsque la pompe fonctionne (5a, 5b), et
le diaphragme (64) est disposé dans le trou de montage (38).

8. Dispositif de commande de pression hydraulique de frein de véhicule selon la revendication 7, dans lequel :
la soupape d'aspiration (6) comprend une soupape unidirectionnelle normalement fermée (61) et un piston (62) configuré pour entrer en contact avec et ouvrir un corps de soupape (613, 614) de la soupape unidirectionnelle (61), et
le diaphragme (64) pousse le piston (62) par un vide créé sur le côté orifice d'admission de la pompe (5a, 5b) par le fonctionnement de la pompe (5a, 5b) et sollicite la soupape unidirectionnelle vers une direction d'ouverture de soupape.

9. Dispositif de commande de pression hydraulique de frein de véhicule selon la revendication 8, dans lequel la soupape unidirectionnelle (61) est reçue dans une partie de réception (38a) formée dans le trou de montage (38), et
un diamètre effectif (L1) du diaphragme (64) est supérieur à un diamètre interne (L3) de la partie de réception (38a).
